# EUROPEAN PATENT APPLICATION

(11) **EP 4 834 164 A1**
(43) Date of publication of application: **04.11.2026**
(21) Application number: 26174912.1
(22) Date of filing: 27.04.2026
(51) Int. Cl.: A43B 23/02, A43B 13/12, B33Y 80/00

(54) **METHOD FOR MANUFACTURING OF AN ARTICLE OF FOOTWEAR**

(30) Priority: 30.04.2025 CH 4622025; 21.10.2025 EP 25210038
(71) Applicant: On Clouds GmbH, 8005 Zürich (CH)
(72) Inventor: VOELCHERT, Johannes, 8005 Zürich (CH)
(74) Representative: Eichelhardt, Frank Robert

(57) **Abstract**

The invention pertains to a method for manufacturing of an article of footwear (10) having a footwear upper (12; 12a-f) and a sole unit (14), the sole unit having at least one sole element (15; 15a-f) and being connected to the footwear upper (12; 12a-f), comprising: a step (S1a-f) of forming a sole element precursor (16a-f) by additive manufacturing; a step (S2a-f) of foaming the sole element precursor (16a-f), thereby forming the at least one sole element (15; 15a-f); and a step (S3a-f) of connecting the at least one sole element (15; 15a-f,) to the footwear upper (12; 12a-f). The invention further pertains to an article of footwear (10) and a manufacturing station (38) for manufacturing of an article of footwear (10).

## Description

### Technical Field

The present invention relates to a method for manufacturing of an article of footwear, to an article of footwear manufactured by such a method, and to a manufacturing station being configured to execute such a method

### Background

Footwear manufacturing has continuously evolved to meet the demands of performance, comfort, and sustainability. The need for high-quality footwear that offers durability, flexibility, breathability, and lightweight construction has driven innovation in production techniques. Traditional methods of manufacturing footwear involve knitting, weaving, or using cut-and-sew techniques, which can result in material waste and require extensive labor. Recent innovations have sought to improve efficiency, reduce waste, and enhance the performance characteristics of these products.

Emerging techniques enable the direct application of material onto a substrate, allowing for controlled deposition of functional layers. This approach facilitates the creation of lightweight, seamless, and high-performance apparel and footwear components with improved breathability and durability while minimizing material waste.

WO 2022/069583 A1 discloses a method for producing a textile material, in particular a shoe upper, by applying a molten thermoplastic filament onto a shoe last to form the textile material with a plurality of superimposed loops. Herein, the thermoplastic filament is ejected from a spray head in a molten state as a helical strand and applied to the shoe last.

In the field of footwear manufacturing, the structural integrity and performance of an article of footwear are significantly influenced by the interface between the midsole and the upper. Historically, midsoles have been formed through molding processes such as injection molding or compression molding which are very limited in terms of customization and design flexibility. Traditionally, bonding the midsole to the upper has been achieved through manual application of stitching, glueing, or a combination of both. However, these conventional methods have limitations regarding the precise alignment between the upper and the midsole, regarding adhesive penetration, and regarding long-term bonding, and often involve multiple steps and separate material components, which can lead to inefficiencies in production and variability in product performance. Advanced material application techniques address these challenges by streamlining the manufacturing process and offering greater design flexibility.

Despite these advancements, there remains a need for further refinement and optimization of these techniques. This involves improving the performance of the products while also increasing flexibility in production processes and product properties, allowing for more precise control over characteristics such as durability and usability. This includes the ability to customize material composition, texture, breathability, elasticity, and structural support while also ensuring scalable and cost-effective production methods that meet the evolving demands of the industry, all while minimizing environmental impact and promoting sustainable practices throughout the production cycle.

Furthermore, a higher degree of automation and preferably full automation of the manufacturing process would be desirable.

### Summary

The invention relates to a method for, in particular automated, manufacturing of an article of footwear having a footwear upper and a sole unit, the sole unit having at least one sole element and being connected to the footwear upper. The method comprises a step of forming a sole element precursor by additive manufacturing, a step of foaming the sole element precursor, thereby forming the at least one sole element, and a step of connecting the at least one sole element to the footwear upper.

Furthermore, the invention pertains to an article of footwear manufactured by such a method.

Further still, the invention concerns a manufacturing station, in particular an automated manufacturing station, for, in particular automated, manufacturing of an article of footwear, the manufacturing station being configured to execute the method as disclosed herein.

Through this, manufacturing and in particular automated manufacturing of an article of footwear can be optimized and/or enabled. Due to the method and manufacturing station as disclosed herein, manufacturing can be conducted more efficiently by streamlining production, allowing for faster and more consistent output. Each step can be optimized, allowing a seamless transition between different steps, maximizing overall throughput. By means of the invention the consistency of the finished products can be improved and the production time can be significantly reduced. Moreover, the performance of an article of footwear produced by the method as disclosed herein can be enhanced by returning energy to the user during usage and/or by providing advantageous cushioning.

Automated manufacturing may refer to the use of an automated manufacturing station, in particular one as disclosed herein, which may comprise a plurality of manufacturing units to carry out manufacturing with minimal or preferably without any human intervention.

The ordering of the steps of the method as disclosed herein may follow the sequence as given in the claims, in particular in claim 1, i.e., the step of forming the sole element precursor by additive manufacturing may be conducted before the step of foaming the sole element precursor, thereby forming the at least one sole element, and the latter step may be performed before the step of connecting the sole element to the footwear upper. However, a different sequence of the steps as given in the claims, in particular in claim 1, may also be envisaged. Furthermore, some of the steps may be conducted at least partially and possibly fully in parallel, in particular one of the steps may actually be part of another step.

The article of footwear as used herein may be, for example, a sports shoe, in particular a running shoe, a marathon shoe, a tennis shoe, a soccer shoe, a football shoe, an athletics shoe, and/or a climbing shoe, a hiking shoe, a skating shoe, a dancing shoe, a leisure shoe, a sneaker, and so on.

The footwear upper as used herein may be, for example, a textile footwear upper, a leather footwear upper, a molded footwear upper, an additive manufactured footwear upper and/or a composite footwear upper. The footwear upper may comprise a textile footwear upper element made from any suitable material, in particular a thermoplastic polymer and/or polymer composition, for example polyamide, polyester, polyether block amide (PEBA), for example PEBAX^{®} (Arkema), thermoplastic polyurethane (TPU), ethylene vinyl acetate (EVA), polyolefin, such as polyethylene or polypropylene, or combinations thereof.

The sole unit may comprise a midsole and an outsole, and possibly an insole, too. The at least one sole element of the sole unit may be embodied as the midsole, the outsole, or the insole. Preferably, the at least one sole element is the midsole. Accordingly, the sole element precursor is preferably a midsole precursor. The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The outsole may be manufactured using any applicable method.

One preferred material combination may be PEBAX^{®} (Arkema) for the midsole and thermoplastic polyurethane (TPU), such as Desmopan^{®} 2790A or Desmopan^{®} 9392A (Covestro), for the footwear upper, in particular the textile footwear upper element. A synthetic rubber may be preferred for the outsole. Another preferred embodiment may be using a thermoplastic polyurethane (TPU), such as Desmopan^{®} 2790A or Desmopan^{®} 9392A (Covestro), for both the midsole and the footwear upper, in particular the textile and/or the textile footwear upper element.

Herein, the term "the at least one sole element" is supposed to refer to one single sole element of the sole unit, in particular the midsole and/or outsole and/or insole, or to some or all sole elements of the sole unit. The at least one sole element may comprise a heel portion and/or a midfoot portion and/or a forefoot portion.

In one embodiment the step of forming the sole element precursor may comprise forming a midsole precursor by additive manufacturing. The step of foaming the sole element precursor may comprise foaming the midsole precursor. As a result, a midsole may be formed. The formed midsole may be connected to the outsole. The outsole may be formed by any known methods, in particular by molding, and may be connected to the midsole by gluing, stitching or welding. Furthermore, the outsole may be directly additive manufactured to an underside of the midsole.

In one embodiment, the step of forming the sole element precursor may comprise forming a midsole precursor and an outsole precursor by additive manufacturing each separately. The step of foaming the sole element precursor may comprise foaming the midsole precursor and as a result the midsole may be formed. The step of foaming the sole element precursor may further comprise foaming the outsole precursor and as a result the outsole may be formed. In other embodiments, the outsole precursor and the outsole may be identical. In other words, the outsole precursor may directly be employed as the outsole. Further still, the outsole precursor may be crosslinked to become the outsole. The step of forming the outsole precursor may comprise forming the outsole precursor onto a bottom surface of the finished midsole by additive manufacturing. The midsole and the outsole may be connected to one another by thermal bonding. Through this, the step of connecting the midsole to the outsole can be performed simultaneously with the step of forming the outsole.

In one embodiment, the step of forming the sole element precursor may comprise forming a midsole precursor together with an outsole precursor by additive manufacturing. As a result, the midsole precursor and the outsole precursor can be formed integral with one another. The step of foaming the sole element precursor may comprise foaming the midsole precursor and possibly also the outsole precursor. Through this the step of forming the midsole precursor and the step of forming the outsole precursor can be merged into one single step.

The step of forming the sole element precursor by additive manufacturing may comprise forming the sole element precursor by any additive manufacturing method, such as, for example, Fused Deposition Modelling (FDM) and/or Selective Laser Sintering (SLS) and/or Power Bed Fusion (PBF) and/or material jetting. The step of forming the sole element precursor by additive manufacturing may comprise additive manufacturing the sole element precursor at a specific temperature depending on the material to be printed, in particular at a temperature within a range of 160°C to 220°C, preferably 200°C to 220°C. The step of forming the sole element precursor by additive manufacturing may comprise using a sole element material, in particular a thermoplastic polymer material, in particular a string with a diameter in a range of 500 µm to 3000 µm. The step of forming the sole element precursor by additive manufacturing may comprise additive manufacturing with a speed depending on the material to be additive manufactured, in particular with a speed in the range of 30 mm/s to 50 mm/s for thermoplastic polyurethanes (TPU) or thermoplastic elastomers (TPE), and with a speed in the range of 40 mm/s to 60 mm/s for polylactic acids (PLA).

The step of forming the sole element precursor may comprise depositing the sole element material onto a shaping carrier. Through this, the step of forming the sole element precursor can be simplified and reliability and/or reproducibility can be increased. The material that is deposited onto the shaping carrier can adhere properly to the surface, which can ensure a stable first layer for complex geometries. Deficiencies, like warping, while additive manufacturing can be minimized or even prevented.

The shaping carrier may comprise a surface intended for contact with the sole element precursor. This surface may be flat or at least partially curved. The surface intended for contact with the sole element precursor may be made from any suitable material such as, for example, aluminum, glass, ceramics, stainless steel, or any other applicable material. The shaping carrier may comprise a rim along or around the surface intended for contact with the sole element precursor. The rim may be designed to guide and/or support the formation of the sole element precursor, specifically a side surface of the sole element precursor. The rim may be integrated into the shaping carrier or may be a separable component.

The rim may also be additive manufactured and may surround the sole element precursor while it is formed. The rim may be formed before the sole element precursor is formed, in particular onto the shaping carrier, such that it may guide during the formation of the sole element precursor. The rim may comprise a proximal distance from the sole element precursor and/or may be in contact with the sole element precursor. The rim may have different parameters depending on the sole element precursor to be formed. The different parameters may be a height, a shape, a material type, a surface texture, or the like. All these parameters may be varied depending on the sole element precursor to be formed. In particular, when the rim is created by additive manufacturing, the height, width and/or number of layers may be varied depending on the planned sole element precursor. After the step of forming the sole element precursor, the rim may be disposed of.

The shaping carrier, in particular the surface intended for contact with the sole element precursor, may be also used during the step of foaming the sole element precursor, such that a desired shape of the at least one sole element is achieved during foaming. The step of foaming the sole element precursor may comprise inserting the shaping carrier with the sole element precursor formed thereon into a heating chamber of a foaming unit of the manufacturing station. The shaping carrier may be made from materials which may resist temperature(s) and/or pressure(s) applied during the step of foaming. The shaping carrier may be made from a material such as, for example, aluminum, glass, ceramics, stainless steel, or any other applicable material.

In one embodiment, the shaping carrier may comprise, in addition to the surface intended for contact with the sole element precursor, a base structure. The surface intended for contact with the sole element precursor may be removably attached to the base structure. The base structure may comprise magnetic coupling means for coupling with the surface intended for contact with the sole element precursor. In one embodiment the base structure may comprise mechanical fixing means for fixing the surface intended for contact with the sole element precursor to the base structure. The mechanical fixing means may comprise, for example, a screw connection and/or a spring-loaded screw connection, a clip connection, and/or the like. After the step of forming the sole element precursor the surface intended for contact with the sole element precursor may be removed from the base structure together with the sole element precursor attached thereto. The surface intended for contact with the sole element precursor may be at least slightly flexible to facilitate the removal of the sole element precursor from the surface intended for contact with the sole element precursor. The surface intended for contact with the sole element precursor may be replaced by another compatible surface intended for contact with the sole element precursor and attached to the base structure for streamlining the manufacturing process.

The shaping carrier, in particular the surface intended for contact with the sole element precursor, may comprise at least one coating, which may comprise a polyetherimide, a polyimide, an adhesive, polytetrafluoroethylene (PTFE), or the like. The at least one coating of the shaping carrier can improve the adhesion of the sole element precursor with the shaping carrier, facilitate the removal of the sole element precursor from the shaping carrier, and/or protect the shaping carrier from any damage which may occur during the removal of the sole element precursor. The coating can improve temperature and/or pressure resistance of the shaping carrier during the step of foaming the sole element precursor.

The shaping carrier may be heated such that a consistent temperature during the step of forming the sole element precursor is maintained. In some embodiments, the shaping carrier may include heating and/or cooling elements, such that it may be heated and/or cooled. In some embodiments at least subregions of the shaping carrier may be heated after the application of the sole element material. The shaping carrier may be heated to a temperature of at least 30°C, at least 50°C, or at least 60°C. The shaping carrier may be heated to a temperature of at most 100°C, at most 90°C, or at most 80°C. The shaping carrier may be heated depending on the sole element material to be applied.

The method may further comprise a step of fixing the at least one sole element to a footwear last, wherein the step of fixing the at least one sole element to the footwear last may be performed after the step of foaming the sole element precursor. Through this, the quality control of the at least one sole element can be improved. This can allow any defect to be identified and corrected before fixing the at least one sole element to the footwear last. As a result, only high-quality sole elements are fixed to the footwear last, minimizing the need to interrupt the manufacturing process to replace faulty sole elements.

In an alternative embodiment, the shaping carrier may be the footwear last. Through this the sole element precursor can be directly formed onto the footwear last, thus adapting to the shape of the footwear last. The step of fixing the at least one sole element to the footwear last can be eliminated in this case. The manufacturing process can be streamlined, which can ensure a reduction in material waste and energy consumption, making the manufacturing process more time and energy efficient.

Depending on the article of footwear to be manufactured, the footwear last may at least partially be shaped according to the envisioned shape of the footwear upper. The footwear last may be a standardized last for a particular shoe size and/or side and/or gender, or may be a customized last, that may be manufactured based on a wearer's foot scan. The footwear last may be provided by several methods, each tailored to different materials, production scales, and design requirements, in particular by molding, additive manufacturing, or by subtractive manufacturing, such as milling. Furthermore, the footwear last as used herein may be made from a variety of materials, such as plastic, aluminum, steel, resin, foam, composite materials, rubber, and/or the like. The footwear last may comprise at least one coating for improving a thermal resistance of the footwear last.

After the step of forming the sole element precursor by additive manufacturing, in particular by depositing the sole element material onto the shaping carrier and/or onto the footwear last, the step of foaming the sole element precursor is performed.

The step of foaming the sole element precursor may comprise chemically foaming and/or physically foaming the at least one sole element precursor. The step of foaming the sole element precursor may comprise applying a chemical foaming agent and/or a physical foaming agent to the sole element material and/or the sole element precursor.

A physical and/or a chemical foaming agent may be incorporated into the sole element material before the step of forming the sole element precursor, in particular onto the shaping carrier and/or the footwear last. The sole element material saturated with the physical and/or chemical foaming agent may be used in an additive manufacturing unit of the manufacturing station. The sole element material may be subjected to an elevated pressure, in particular in a pressurized vessel of the manufacturing station, so that a physical foaming agent, in particular an inert gas, like CO₂ or N₂, may dissolve and/or may be kept dissolved in the sole element material.

A physical and/or chemical foaming agent may be incorporated into the sole element material by mixing the physical and/or chemical foaming agent with the sole element material in an extruder of the manufacturing station. The extruder may mix the chemical and/or the physical foaming agent and the sole element material, in particular the thermoplastic polymer, such that the chemical and/or physical foaming agent may be evenly distributed in the sole element material. Thus, a sole element material already being blended with a foaming agent may be used during the step of forming the sole element precursor. The sole element material may be provided in the form of a string, a powder, or granules.

A physical and/or chemical foaming agent may be incorporated into the sole element precursor after the step of forming the sole element precursor. A gas, for example N₂ or CO₂, in particular in a supercritical state, may be introduced into the sole element precursor. Furthermore, the sole element precursor may be saturated with a chemical foaming agent. The chemical foaming agents used herein may be any of azodicarbonamide (ADC), sodium bicarbonate hydrazine derivates or the like. The chemical foaming agent may be infused into the sole element precursor.

The step of foaming the sole element precursor may comprise activating the chemical and/or physical foaming agent incorporated in the sole element material and/or the sole element precursor using a foaming unit of the manufacturing station. The foaming unit may comprise a heating chamber, preferably an autoclave and/or a heating unit. The physical and/or chemical foaming agent incorporated in the sole element material and/or the sole element precursor may be activated by the heating chamber and/or the heating unit. The heating unit may comprise a hot air blower and/or an IR-irradiation unit and/or laser and/or any other applicable heater.

The step of foaming the sole element precursor may comprise activating the physical and/or chemical foaming agent after the step of forming the sole element precursor. Through this, a precise foaming process can be achieved, and the amount of the foaming agent can be accurately controlled.

The step of foaming the sole element precursor may comprise activating a physical foaming agent incorporated into the sole element precursor. The sole element precursor may be subjected to heating in a heating chamber, preferably the aforementioned heating chamber, in particular with a pre-set temperature and/or pressure. The sole element precursor may be placed into the heating chamber while still affixed to the shaping carrier, in particular the footwear last, or after being removed from the shaping carrier. The sole element precursor may be placed into the heating chamber whereupon a gas, for example N₂ or CO₂, may be introduced, in particular at a first gas pressure. Upon introduction, the gas may become supercritical and may dissolve into an interior of the sole element precursor. Foaming of the sole element precursor may occur at a second gas pressure in the heating chamber, the second gas pressure being, in particular, lower than the first gas pressure.

The step of foaming the sole element precursor may comprise free foaming, which may also be called "direct foaming", the sole element precursor by using a foaming unit, preferably an autoclave. In this case, the step of foaming the sole element precursor may comprise activating the physical and/or chemical foaming agent under controlled foaming conditions, allowing the sole element precursor to foam freely, in particular without using any mold. Through this, the intended geometry of the sole element can be obtained with minimal deviations from the intended shape. Thus, a step of final shaping of the sole element, in particular using a compression mold of the manufacturing station, can be omitted.

The step of foaming the sole element precursor may comprise activating a chemical foaming agent incorporated into the sole element precursor. The chemical foaming agent may be activated by a heating unit, preferably the aforementioned heating unit. During heat treatment of the sole element precursor by the heating unit, the sole element precursor may still be attached to the shaping carrier, in particular the footwear last, or it may have been removed from the shaping carrier before. By applying heat to the sole element precursor being infused with the chemical foaming agent, the latter may be activated, thus foaming the sole element precursor.

The step of foaming the sole element precursor may be performed intermittently with the step of forming the sole element precursor, in particular during depositing the sole element material onto the shaping carrier and/or the footwear last. Foaming of a portion and/or layer of the sole element precursor may occur directly after this portion and/or layer has been formed by additive manufacturing, in particular on the shaping carrier and/or footwear last. Through this, each portion and/or layer of the sole element precursor can be precisely formed and subsequently foamed. The overall process can be accelerated. Furthermore, the manufacturing system can possibly be simplified.

The step of forming the sole element precursor by additive manufacturing may comprise applying the sole element material according to a first application scheme, forming a first sole element layer. The first sole element layer may be foamed by a heating unit, preferably the aforementioned heating unit. The heating unit may be in close proximity with an additive manufacturing nozzle of an additive manufacturing unit of the manufacturing station for outputting the sole element material. The step of forming the sole element precursor may comprise applying the sole element material according to a second application scheme, thereby forming a second sole element layer on the already foamed first sole element layer. These steps may be repeated until the complete at least one sole element is formed. The heating unit may be fixed to the additive manufacturing nozzle of the additive manufacturing unit. In such a situation, the heating unit may enable foaming immediately after the sole element material has been applied onto the shaping carrier and/or the footwear last. Application parameters, such as a pressure and/or a temperature of an additive manufacturing nozzle of the additive manufacturing unit, may be controlled such that foaming does not occur during the step of forming the sole element precursor, in particular during depositing the sole element material onto the shaping carrier.

The step of foaming the sole element precursor and the step of forming the sole element precursor may be performed simultaneously. Through this the manufacturing process can be streamlined.

During the step of forming the sole element precursor, in particular during depositing the sole element material onto the shaping carrier and/or the footwear last, the sole element material leaving an additive manufacturing nozzle of an additive manufacturing unit of the manufacturing station may be immediately foamed. Herein, the sole element material may be previously infused with a physical and/or chemical foaming agent. A pressure and/or temperature inside an extruder body of the additive manufacturing unit and a pressure and/or temperature of the sole element material exiting the additive manufacturing nozzle may be monitored. Through this, an activation of the physical and/or chemical foaming agent inside the extruder body may be prevented. In addition, a deposition rate of the sole element material may also be monitored. Upon the sole element material exiting from the additive manufacturing nozzle, the pressure decreases, thus foaming the sole element material. As a result of the pressure change, the at least one sole element may be formed.

The step of foaming the sole element precursor may comprise a step, in particular a sub-step, of re-shaping the foamed sole element precursor to obtain the at least one sole element in its final shape. The step of re-shaping may comprise compressing the foamed sole element precursor. The step of re-shaping may comprise placing the foamed sole element precursor into a compression mold of the manufacturing station. The foamed sole element precursor may be heated and compressed for a specific duration of time and at a specific temperature inside the compression mold. The step of re-shaping may comprise compressing different portions of the foamed sole element precursor at different levels. Through this, different portions of the sole element may exhibit localized stiffness variations. The at least one sole element may exhibit specific mechanical properties in different portions.

The method may further comprise a step of forming the footwear upper by applying at least one thermoplastic filament onto a footwear last, in particular the aforementioned footwear last, to form a plurality of path segments, in particular loops, on the footwear last along an application path. Through this, the footwear upper can be formed precisely to the shape of the footwear last. This can ensure customized fit, and it can enable greater design freedom. Furthermore, manufacturing can be automated and/or streamlined, and the manufacturing production time can be significantly reduced. The footwear upper can be formed with different mechanical properties tailored to the specific needs of a user.

The step of forming the footwear upper may comprise applying at least one thermoplastic filament in a solid state onto the footwear last and heating afterwards, for example by hot air blowing, heat irradiation, or any other applicable method, for fusing each path segment, in particular each loop, of the at least one filament with one another.

Alternatively and preferably, the at least one thermoplastic filament may be applied in an at least partially molten and/or liquid state onto the footwear last, the at least one thermoplastic filament being hereby fused with itself upon hardening. Before or while applying the at least one thermoplastic filament, the footwear last may be heated, in particular via a heating element integrated into the footwear last and/or via an external heating unit, for example a hot air blower, an IR-irradiation unit, a laser, or any other applicable heating unit.

The at least one thermoplastic filament may be provided as a strand, in particular a continuous strand, preferably having a circular cross-section. During application and before fusing, the at least one thermoplastic filament may have a maximum thickness of 10 µm to 1000 µm, of 50 µm to 500 µm, of 50 µm to 300 µm, or of 75 µm to 250 µm. Herein, the "maximum thickness" may be the maximum cross-sectional extension of the thermoplastic filament. If the thermoplastic filament has a circular cross-section, the maximum thickness is equal to the diameter of the thermoplastic filament.

The plurality of path segments, in particular the loops, may advantageously be at least partially overlapping with each other and/or with themselves and may at least partially be located on top of each other. The plurality of path segments may be embodied as recurring pattern, in particular recurring loops, of the at least one thermoplastic filament.

The at least one thermoplastic filament may form at least 100, in particular at least 1000, in particular at least 5000 path segments, in particular loops.

In some embodiments, the at least one thermoplastic filament may have a length of at least 0.1 m, at least 1 m, at least 100 m, at least 1000 m, or at least 1500 m. The at least one thermoplastic filament and may have a filament length of at most 10000 m, at most 5000 m, or at most 2500 m.

The loops may have any desired shape. For example, the loops may be round and particularly circular or oval, such as elliptic, or they can be polygonal. Preferably they are round. The loops may be partially superimposed loops which are partially arranged on top of each other and thus partially overlap. However, the loops are not completely aligned with each other but offset to each other. In other words, the loops partially overlap with each other.

The at least one thermoplastic filament may form a plurality of crossings along the application path. At the crossings, the at least one thermoplastic filament contacts itself or another thermoplastic filament and may form a material-bonded, in particular fused, connection, in particular devoid of any additional, i.e. external adhesive.

The at least one thermoplastic filament may be provided as a strand by a filament supply unit of a footwear upper forming unit of the manufacturing station, wherein the plurality of path segments, in particular loops, may be formed by a relative movement and/or tilting of a spray head of the footwear upper forming unit and/or the filament supply unit with respect to the footwear last. The spray head of the footwear upper forming unit may be fixed and the footwear last may be robotically moved in order to form the plurality of path segments, in particular loops. However, the opposite arrangement and motion would also be conceivable.

The spray head of the footwear upper forming unit may comprise a plurality of gas discharge nozzles for discharging a gas, in particular heated air, laterally from at least one filament discharge nozzle of the spray head for discharging the at least one thermoplastic filament. The gas discharge nozzles may be, advantageously evenly, arranged around the at least one filament discharge nozzle and may be angled with respect to a discharge direction of the at least one filament discharge nozzle, in particular in order to form the ejected at least one thermoplastic filament into a helix with increasing diameter as the distance from the spray head increases. In this case the at least one application path is scanned by a relative movement of the spray head of the footwear upper forming unit with respect to the footwear last, whereas the path segments, in particular the loops, may be formed by the helical discharge of the at least one thermoplastic filament from the spray head. Herein, the spray head may be fixed and the footwear last may be robotically moved in order to drive along the at least one application path.

A spray head having gas discharges nozzles and a deposition method as disclosed herein are also described in WO 2022/069583 A1. Here again, the opposite arrangement and motion of spray head and footwear last would be conceivable, too.

In some embodiments, the at least one molten thermoplastic filament may be ejected from the spray head with a velocity of at least 0.1 m/s, at least 0.5 m/s, or at least 0.7 m/s. The molten thermoplastic filament may be ejected from the spray head with a velocity of at most 10 m/s, at most 5 m/s, or at most 1 m/s.

The step of forming the footwear upper may be partly and preferably fully automated.

The step of foaming the sole element precursor may be performed prior to the step of forming the footwear upper. This approach allows the sole element to be additive manufactured independently from the step of forming the footwear upper, reducing the risks of defects and ensuring consistent quality.

The step of connecting the at least one sole element, in particular the midsole, to the footwear upper may be performed during the step of forming the footwear upper by partly applying the at least one thermoplastic filament onto the at least one sole element, in particular a side surface of the at least one sole element, in particular the midsole. This eliminates the need for a separate process step and/or manufacturing unit. Thus, the overall number of manufacturing steps can be reduced, optimizing production performance. The article of footwear can be made advantageously durable by the strong connection between the footwear upper and the sole unit.

Alternatively, the step of forming the sole element precursor may be performed after the step of forming the footwear upper. Through this, the footwear upper can be precisely controlled ensuring that it can meet the design standards before being connected to the at least one sole element. Therefore, the quality of the footwear upper can be optimized.

The step of forming the sole element precursor may comprise applying the sole element precursor at and/or onto an underside of the footwear upper. The step of forming the sole element precursor at and/or onto the underside of the footwear upper can be highly automated and can therefore ensure a more consistent and uniform article of footwear.

The step of connecting the at least one sole element to the footwear upper is performed during the step of forming the sole element precursor. This eliminates the need for a separate process step and/or manufacturing unit. Through this, the step of forming the sole element precursor and forming the at least one sole element can be performed simultaneously with the step of connecting the footwear upper with the at least one sole element of the sole unit. Thus, efficiency of the process can be increased, accelerating the overall manufacturing timeline. In addition, it eliminates stitching, gluing or assembling the sole unit to the footwear upper, therefore reducing material waste and manufacturing costs.

After the footwear upper may be formed onto the footwear last, at the footwear upper forming unit of the manufacturing station, the footwear last may be transferred together with the footwear upper applied thereon to the additive manufacturing unit of the manufacturing station by the robotic handler. The footwear upper forming unit may be positioned before and/or in close proximity to the additive manufacturing unit. At the additive manufacturing unit of the manufacturing station, the sole element precursor is formed.

In one embodiment, the sole element precursor may be formed by depositing the sole element material at and/or onto an underside of the footwear upper. After the step of forming the sole element precursor element precursor at and/or onto an underside of the footwear upper, the sole element precursor may be transferred together with the footwear upper and the footwear last to a heating chamber or heater of the foaming unit.

The at least one thermoplastic filament of the footwear upper may be the same as the sole element material used in forming the sole element precursor. However, the at least one thermoplastic filament of the footwear upper may also be different from the sole element material used in forming the sole element precursor.

The step of connecting the at least one sole element, in particular the midsole, to the footwear upper may comprise connecting the footwear upper using an intermediate component between the footwear upper and the at least one sole element, in particular the midsole. The footwear upper joined with the intermediate component may be connected to the at least one sole element afterwards. Alternatively, the at least one sole element joined with the intermediate component may be connected to the footwear upper afterwards. In this embodiment the at least one sole precursor may be foamed by any of the foaming processes disclosed herein.

The step of forming the sole element precursor may comprise forming the sole element precursor with a plurality of recurring cell units. Through this, the at least one sole element can be additive manufactured with less material while achieving enhanced mechanical properties such as cushioning, energy absorption and/or shock mitigation.

Herein, the "cell units" may be understood as modules that enclose at least one void within defined geometric boundaries and may vary in shape and size.

The step of forming the sole element precursor by additive manufacturing may comprise creating a three-dimensional geometry of the sole precursor with the plurality of recurring cell unit, in particular using a Computer-Aided Design (CAD) software. The three-dimensional geometry with the plurality of recurring cell units may be a lattice structure. The lattice structure may be a strut-based structure and/or a surface-based structure
The strut-based structure may comprise a plurality of strut elements and a plurality of node elements. The strut elements, as disclosed herein, may be rod-like structures which may connect to form a framework of the recurring cell units. The node elements, as disclosed herein, may be junctions where some of the struts intersect. The strut elements may have a circular or rectangular or square or triangular or I-shaped or any other cross section. The strut-based structure may be, for example, a cubic, a body-center cubic, a truncated cubic, a diamond structure, and/or any other applicable structure.

In a preferred embodiment, not limited thereto, the strut-based structure may be an auxetic structure. The step of forming the sole element precursor may comprise creating a three-dimensional auxetic structure. Through this, the sole element can comprise improved energy absorbent properties, ensuring comfort for the user.

The auxetic structure, as disclosed herein, may be a structure which exhibits a negative Poisson's ratio, showing expansion perpendicular to a direction of a stretching force, and contraction under compression The auxetic structure may comprise any re-entered structure, such as, for example, a honeycomb structure; a chiral structure, such as, for example, a tetra chiral structure, and/or a rotating polygonal unit structure, such as, for example, rotating squares or rotating triangular.

The re-entered structure, as used herein, may have recurring cell units comprising an inward-bending geometry. The chiral structure, as used herein, may be formed by the connection of the plurality of strut elements with node elements, such that a rotation of the plurality of the strut elements may be achieved. The rotating polygonal unit structure, as used herein, may comprise geometric polygonal shapes such as squares, rectangles, interconnected at their vertices, such that this connection may allow rotational movements. This may permit the auxetic structure to deform.

The surface-based structure may comprise a continuous surface that may extend in three dimensions. The surface-based structure may be created by using mathematical functions in the CAD software, such as, for example, a Triply Periodic Minimal Surface (TPMS). The surface-based structure may comprise an averaged curvature equal to zero. The surface-based structures may bend equally in opposite directions and may create a balanced shape. The surface-based structure may be a sheet-based surface. The surface-based structure may comprise different shapes, which may be altered by a variety of mathematical functions. The surface-based structure may comprise specific mechanical properties such as, for example, uniform stress distribution, high energy absorption, and mechanical stability.

The step of forming the sole element precursor may comprise varying a size of the plurality of recurring cell units. Through this, mechanical properties of the at least one sole element can be deliberately set, significantly increasing design flexibility. The at least one sole element, in particular the midsole, can exhibit specific properties in different portions. This approach, for example, can reduce material in areas where it is not needed and can reinforce critical portions, where more stability is required.

Varying the size of the plurality of recurring cell units may comprise creating a density gradient. Additionally, or alternatively, varying the size of the plurality of recurring cell units may comprise creating an abrupt increase in density. Varying the size of the plurality of recurring cell units may comprise altering geometric parameters of the plurality of strut elements in a strut-based structure. The geometric parameters of the plurality of strut elements, such as for example their length may be varied in different portions of the sole element precursor and/or the at least one sole element. The recurring cell units may be larger cell units and smaller cell units, wherein the larger cell units may be cell units having longer strut elements than the smaller cell units. As a result, in the large cell units a distance between the node elements would increase compared to the distance between the node elements in the smaller cell units.

In portions of the at least one sole element, in particular the midsole, where more mechanical load may be experienced, for example the heel portion and/or the forefoot portion, the plurality of recurring cell units may comprise shorter strut elements compared to other portions such as midfoot portion. As a result, the density of the sole element in the heel portion and/or the forefoot portion may increase. Through this, structural support and durability can be increased.

In portions of the at least one sole element, in particular the midsole, where greater flexibility is required, such as the midfoot and/or the forefoot portion, the size of the plurality of recurring cell units may comprise longer strut elements compared to another portion of the at least one sole element such as heel portion. As a result, the density of the sole element in the midfoot portion may decrease. Therefore, more cushioning can be achieved.

The step of forming the sole element precursor may comprise fine tuning at least one mechanical property in at least one specific area of the sole element precursor. Through this, the at least one sole element and/or the sole unit can be customized according to specific needs, providing, for example, more cushioning in areas requiring impact absorption and/or increased stiffness where greater support is needed. As a result, the performance of the footwear article can be optimized.

The mechanical properties of the at least one sole element which may be fine-tuned may be stiffness and/or energy absorption and/or resilience and/or cushioning and/or elasticity, or any other mechanical property. The at least one specific area of the sole element precursor may comprise one specific area of a portion of the sole element precursor, for example a core area of the heel portion and/or an arch area of the midfoot portion and/or a big toe area of the forefoot portion.

The core area of the heel portion may require higher energy absorption, such that it may withstand high impact forces while performing a physical activity, such as walking and/or running. These mechanical properties in this specific area may be fine-tuned by altering the size of the plurality of recurring cell units as disclosed herein. The mechanical properties in this specific area may also be influenced by a material. For example, when a thermoplastic polyurethane (TPU) is used, the core area may exhibit more flexibility and elastically, and improved energy absorption.

The arch area of the midfoot portion may require higher stiffness and support. The arch area of the midsole is a transition area, therefore the size of the recurring cell units in this area may vary. The size of the recurring cell units may vary from smaller cell units, having higher density, to the forefoot portion, which may comprise larger cell units, exhibiting low density.

The toe area, in particular the big toe area, of the forefoot portion may require higher flexibility, cushioning, and energy return. These mechanical properties in this specific area may be fined-tuned by altering the size of the recurring cell units as disclosed herein. The mechanical properties in this specific area may also be influenced by a material.

The step of forming the sole element precursor may comprise employing different materials and/or additives in different portions of the sole element precursor. Through this, specific properties of the different materials can be used and/or combined, which can improve the overall performance of the at least one sole element and the users' experience. Furthermore, design flexibility can be increased.

Different portions of the sole element precursor and/or the at least one sole element may comprise a material and/or at least one additive which may improve cushioning, support, stability, impact absorption and/or any other property. The step of forming the sole element precursor may comprise applying in different portions of the at least one sole element, in particular the midsole, different materials. For example, a material for improving cushioning in a specific portion of the at least one sole element, in particular the midsole, may be ethylene vinyl acetate (EVA), polyurethane (PU), or any other applicable material. Furthermore, a material for improving stiffness in a specific portion of the at least one sole element, in particular the midsole, may be thermoplastic polyurethane (TPU), polyether block amide (PEBA), or any other applicable material.

Different additives such as plasticizers and/or silicone oils and/or foaming agents and or the like may be employed in different portions of the at least one sole element, in particular the midsole, and or the sole element precursor. Thus, for example, stronger foaming can be induced in specific portions of the sole element precursor.

Employing different materials and/or additives in different portions of the sole element precursor may comprise applying different material layers onto the shaping carrier, in particular the footwear last. The step of employing different materials and/or additives in different portions of the sole element precursor may comprise applying a different number of layers in different portions of the at least one sole element. For example, the forefoot portion may comprise fewer material layers than the midfoot portion and/or the heel portion.

Applying a different number of layers in different portions of the sole element precursor may comprise applying a specific number of layers of the same material or different materials in one portion of the sole element precursor. For example, the heel section may be formed by applying a plurality of layers made from a material such as thermoplastic polyurethane (TPU), polyether block amid (PEBA), or any other applicable material for improving stiffness in such portion.

In another embodiment, the number of material layers may be the same for different or all portions of the sole element precursor and/or the at least one sole element, in particular the midsole.

In yet another embodiment, the step of forming the sole element precursor by additive manufacturing may comprise separately forming different portions of the sole element, in particular the heel portion, the midfoot portion and/or the forefoot portion, by additive manufacturing. The step of forming the sole element precursor may comprise thermally bonding these portions together afterwards.

The step of foaming the sole element precursor may comprise diversifying a foaming degree across different portions of the at least one sole element. Through this, the at least one sole element can be lightweighted and can have better support and compression in areas where needed. Further properties, such as improved thermal insulation may also be achieved.

The step of forming the sole element precursor may comprise employing more or less foaming agent(s) and/or different foaming agents in different portions of the sole element precursor. Employing more or less foaming agent(s) in different portions of the sole element precursor may comprise altering a foaming agent concentration in different portions of the sole element precursor. In portions of the sole element precursor, where higher cushioning may be required for the at least one sole element, a higher foaming agent concentration may be employed. In portions of the sole element precursor, where higher stiffness may be required for the at least one sole element, a low foaming agent concentration may be employed.

Employing different foaming agents in different portions of the sole element precursor may comprise using foaming agents that produce different amounts of foaming gas at given foaming properties, in particular temperature and/or pressure. During the step of foaming the sole element precursor the foaming properties may be changed to induce successive foaming of different portions of the sole element precursor as the different foaming agents may be activated one after the other.

The method may further comprise a step of printing a print mark onto the footwear upper and/or the at least one element of the sole unit. Thus, a footwear article can be easily customized regarding aesthetics. Furthermore, branding can advantageously be enabled. Different designs, colors and patterns can be easily integrated into the production process without stopping the production line or changing equipment.

The step of printing the print mark may be performed after the step of forming the footwear upper and/or after the step of forming the at least one sole element and/or after a step of plasma treatment. The step of printing the print mark may be performed prior to a step of curing.

The method may further comprise a step of curing the footwear upper and/or the at least one sole element and/or the sole unit and/or the print mark at pre-set parameters. Through curing the production process can be sped up, in particular by eliminating or at least reducing waiting time for the material to consolidate naturally, allowing for faster turnaround and improved efficiency, therefore optimizing the production process.

In some embodiments, curing may comprise irradiation of certain elements of the footwear article with light of a suitable wavelength. The step of curing the print mark may be performed by any applicable method.

In some embodiments, the step of curing may comprise curing the footwear article while it is placed in the footwear box over a specific time period and at room temperature.

The shaping carrier, in particular the footwear last, may be jogged from one step to the next by the at least one robotic handler, in particular the aforementioned common robotic handler or the dedicated robotic handlers of the manufacturing units, of the manufacturing station. Thus, efficiency, precision, and flexibility can be improved. The shaping carrier, in particular the footwear last, can therefore be efficiently transferred from one manufacturing unit to the next, streamlining the production process.

The step of plasma treatment may alter an outer surface of the article of footwear such that the print mark ink may adhere better to the article of footwear. During the step of plasma treatment, the outer surface of the footwear upper and/or at least one sole element may be electrostatically charged such that the adhesion between the print mark and the article of footwear is improved.

The at least one robotic handler may be a partly of fully automated robotic handler. The at least one robotic handler may grip and/or lift and/or rotate and/or release and/or attach the shaping carrier, in particular the footwear last. In one embodiment the manufacturing station may comprise only one robotic handler, which may be movable from one manufacturing unit to the next manufacturing unit. In one embodiment the robotic handler may be part of each of the plurality of manufacturing units. The at least one robotic handler may comprise a vacuum fixation tool or a customized attachment tool for attaching the shaping carrier, in particular the footwear last.

The manufacturing station, which is configured to automatically execute the method as disclosed herein, may comprise a plurality of manufacturing units for manufacturing the article of footwear as described herein. The plurality of manufacturing units may be arranged according to a sequence of the method steps. The plurality of manufacturing units may comprise a control unit for controlling the execution of the method by controlling at least one manufacturing unit, some, or all manufacturing units of the plurality of manufacturing units. The control unit may, for example, comprise a processing unit and a memory unit containing computer-readable instructions that may be read and executed by the processing unit in order to implement the method.

Additionally, the manufacturing station may comprise the shaping carrier, in particular the footwear last, in particular a plurality of footwear lasts for different foot sizes and/or shapes and/or sides and/or genders.

The manufacturing station may further comprise the robotic handler configured to receive and/or attach to the shaping carrier. The shaping carrier may be attachable or detachable from the robotic handler fully or partly automatically. In some embodiments, the at least one sole element may be attached to shaping carrier, before it is received by the robotic handler. The robotic handler may pick up the at least one sole element fixed to the shaping carrier and transfer it to a fixing unit. In the fixing unit, the robotic handler may remove the at least one sole element from the shaping carrier and may affixed the at least one sole element to a footwear last. In another embodiment, the robotic handler may remove the at least one sole element from the shaping carrier before transferring it to the fixing unit. The robotic handler may then transfer the footwear last together with the at least one sole element attached thereto to any one of the plurality of manufacturing units following the sequence of the manufacturing steps.

In some embodiments, the robotic handler may receive only the shaping carrier, in particular the footwear last, without the at least one sole element attached thereto. The robotic handler may handle and/or transfer the shaping carrier, in particular the footwear last, to the footwear upper forming unit to perform the step of forming the footwear upper. The robotic handler may orient the shaping carrier, in particular the footwear last, with respect to any one of the plurality of manufacturing units to perform a respective manufacturing step.

In another embodiment, some or each of the plurality of manufacturing units may comprise a dedicated robotic handler for handling and/or transferring the shaping carrier, in particular the footwear last, and/or the at least one sole element and/or the footwear upper from one robotic handler of a specific manufacturing unit to the next robotic handler of another specific manufacturing unit. Furthermore, two or more of the manufacturing units may share a common robotic handler.

The plurality of manufacturing units may comprise, in particular among others: the additive manufacturing unit and/or the foaming unit and/or the footwear upper forming unit and/or the fixing unit and/or a printing unit and/or a curing unit and/or a plasma treatment unit and/or a de-shaping unit and/or a packaging unit.

The additive manufacturing unit of the manufacturing station may perform the step of forming the sole element precursor. The additive manufacturing unit may comprise a feeding unit, the additive manufacturing nozzle for applying the sole element material and/or the shaping carrier for depositing the sole element material and/or the extruder for mixing a foaming agent with the sole element material and/or the vessel for mixing a physical foaming agent with the sole element material and/or a heater for activating a foaming agent and/or a robotic handler for automatically handling and/or transferring the at least one sole element from and/or to the next manufacturing unit.

The foaming unit of the manufacturing station may perform the step of foaming the sole element precursor. The foaming unit may comprise the heating unit or the heating chamber, in particular the autoclave, for activating the foaming agent. The foaming unit and the additive manufacturing unit may be partially integrated with each other. In this case, the foaming unit and the additive manufacturing unit may both comprise the extruder for mixing a foaming agent with the sole element material and/or the vessel for mixing a physical foaming agent with the sole element material and/or the compression mold and/or the robotic handler for automatically handling and/or transferring the sole element precursor and/or the at least one sole element from and/or to the next manufacturing unit.

The footwear upper forming unit of the manufacturing station may perform the step of forming the footwear upper. The footwear upper forming unit may comprise the spray head for spraying the at least one thermoplastic filament onto the footwear last, an extruder for mixing the molten polymer composition, the gas discharge nozzles, the filament supply unit for supplying the filament to the extruder, the heating element to heat the footwear last and/or the footwear upper and/or the at least one sole element, and/or a robotic handler for automatically manipulating a relative position and/or orientation of the spray head and/or the heating element with respect to the footwear last and/or for automatically transferring the footwear last and/or the footwear upper from and/or to the next manufacturing unit.

The fixing unit of the manufacturing station may perform the step of fixing the at least one sole element to a footwear last.

The printing unit of the manufacturing station may perform the step of printing the print mark onto the footwear upper and/or onto the at least one sole element and/or onto the sole unit. The printing unit may comprise at least one print head for applying the print mark, and/or the plasma treatment unit for plasma treating the footwear upper and/or the at least one sole element and/or the sole unit, in particular prior to printing, and/or a robotic handler for transferring the footwear upper and/or the at least one sole element and/or sole unit from and/or to the next manufacturing unit.

The curing unit of the manufacturing station may perform the step of curing the footwear upper and/or the at least one sole element and/or the sole unit and/or the print mark. The curing unit may comprise a heating device and/or a UV-irradiation unit. The curing unit may further comprise a robotic handler for manipulating a relative position and/or orientation of the curing unit with respect to the footwear last and/or the footwear upper and/or the at least one sole element and/or the sole unit and/or the print mark. The robotic handler may transfer the footwear last and/or the at least one sole element and/or the sole unit and/or the footwear upper and/or the article of footwear from and/or to the next manufacturing unit.

The de-lasting unit of the manufacturing station may perform the step of detaching the article of footwear from the footwear last. The de-lasting unit may comprise a vacuum system to pull the article of footwear via application of reduced pressure from the footwear last, or mechanical means for gripping the article of footwear and pulling it from the footwear last.

The packaging unit of the manufacturing station may perform the step of packaging the article of footwear into a sales and/or transport packaging. The packaging unit may comprise a boxing unit for placing the article of footwear into the sales and/or transport packaging, a wrapping machine for applying protective materials to prevent damage to the article of footwear and/or the sales and/or transport packaging, and/or a sealing unit for sealing the sales and/or transport packaging.

The plurality of manufacturing units may be arranged linearly or circularly, in particular around a central robotic handler common to some or all of the manufacturing units. The plurality of manufacturing units may be arranged in a compact and space-efficient layout. In one embodiment, the plurality of manufacturing units may be arranged in the following sequential order: the additive manufacturing unit, possibly the foaming unit, the footwear upper forming unit, possibly the plasma treatment unit, possibly the printing unit, possibly the curing unit, possibly the de-lasting unit and finally possibly the packaging unit. In another embodiment, the plurality of the manufacturing units may be arranged in the following sequential order: the footwear upper forming unit, the additive manufacturing unit, possibly the foaming unit, possibly the plasma treatment unit, possibly the printing unit, possibly the curing unit, possibly the de-lasting unit and finally possibly the packaging unit.

Furthermore, the manufacturing station may comprise an enclosure housing at least some, preferably the majority and possibly all of the manufacturing units of the plurality of manufacturing units. The enclosure may house all manufacturing units of the plurality of manufacturing units apart from the de-lasting unit and/or packaging unit. The enclosure can provide protection during manufacturing, not only for personnel, but for the process itself.

The methods, elements and articles disclosed herein are not intended to be limited to the application and embodiment described above. In particular, they may have a number of individual elements, components and units as well as process steps deviating from a number specified herein in order to fulfill a mode of operation described herein. In addition, in the case of value ranges specified in this disclosure, values lying within the specified limits are also to be regarded as disclosed.

In particular, it is pointed out that all features, properties and methods described in relation to an element, or an article are transferable mutatis mutandis to methods and can be used in the sense of the invention and are deemed to be co-disclosed. The same applies in the opposite direction. This means that structural features mentioned in relation to methods can also be taken into account and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

### Brief description of the drawings

Embodiments of the present disclosure will now be described by way of example only and with reference to the following accompanying drawings.
Figure 1 depicts a schematic view of an article of footwear comprising a footwear upper and a sole unit.
Figure 2 shows a schematic representation of a generic manufacturing station for automated manufacturing of the article of footwear.
Figure 3 shows a schematic view of an additive manufacturing unit of the manufacturing station according to a first embodiment.
Figure 4 shows a schematic view of a foaming unit of the manufacturing station according to a first embodiment.
Figure 5 shows a schematic view of a footwear upper forming unit of the manufacturing station according to a first, second and third embodiment.
Figure 6 shows a schematic of a method for automated manufacturing the article of footwear using the manufacturing station and its first embodiments of the additive manufacturing unit, the foaming unit, and the footwear upper forming unit.
Figure 7 shows a schematic view of an additive manufacturing unit and a foaming unit of the manufacturing station according to a second embodiment.
Figure 8 shows a schematic view of an additive manufacturing unit and a foaming unit of the manufacturing station according to a third embodiment.
Figure 9 shows a schematic of methods for manufacturing the article of footwear using the manufacturing station and its second or third embodiments of the additive manufacturing unit and the foaming unit, and its second and third embodiments of the footwear upper forming unit.
Figure 10 shows a schematic view of a footwear upper forming unit of the manufacturing station according to a fourth, fifth and sixth embodiment.
Figure 11 shows a schematic view of an additive manufacturing unit of the manufacturing station according to a fourth embodiment.
Figure 12 illustrates a schematic view of a foaming unit of the manufacturing station according to a fourth embodiment.
Figure 13 shows a schematic of a method for manufacturing the article of footwear using the manufacturing station and its fourth embodiments of the additive manufacturing unit, the foaming unit, and the footwear upper forming unit.
Figure 14 shows a schematic view of an additive manufacturing unit and a foaming unit of the manufacturing station according to a fifth embodiment.
Figure 15 shows a schematic view of an additive manufacturing unit and a foaming unit of the manufacturing station according to a sixth embodiment.
Figure 16 shows a schematic view of methods for manufacturing the article of footwear using the manufacturing station and its fifth or sixth embodiments of the additive manufacturing unit and the foaming unit, and its fifth and sixth embodiment of the footwear upper forming unit.

### Detailed Description

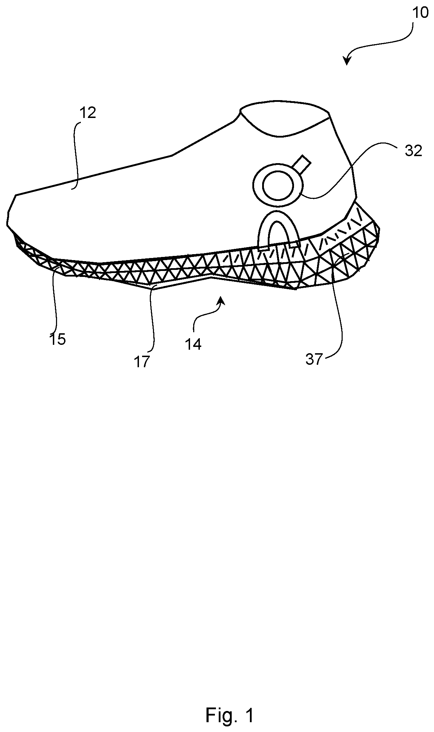

Figure 1 illustrates an article of footwear 10 comprising a footwear upper 12 and a sole unit 14. The sole unit 14 comprises at least one sole element 15 being embodied as a midsole. Furthermore, the sole unit comprises an outsole 17. The at least one sole element 15 comprises a lattice structure with a plurality of foamed cell units 37, forming a triangular lattice structure. However, the shape of the plurality of the foamed cell units 37 is not limited thereto. The article of footwear 10 may also comprise a print mark 32. The article of footwear 10 may be manufactured using any of the methods disclosed in the following.

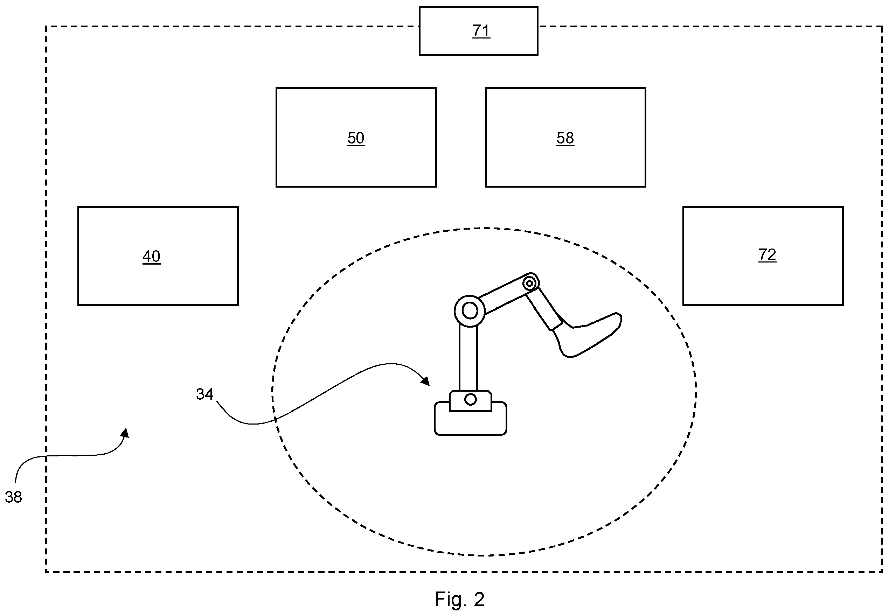

Figure 2 shows a schematic representation of a generic manufacturing station 38 for automated manufacturing of the article of footwear 10.

The manufacturing station 38 comprises a plurality of manufacturing units, namely an additive manufacturing unit 40, a foaming unit 50, a footwear upper forming unit 58 and a further manufacturing unit 72. The further manufacturing unit 72 may comprise a printing unit and/or a curing unit and/or a plasma treatment unit and/or a packaging unit. The manufacturing station 38 comprises a robotic handler 34. All the manufacturing units are controlled by a control unit 71 of the manufacturing station 38. The robotic handler 34 may have six degrees of freedom and can move from one of the manufacturing units to another of the manufacturing units.

The following figures present various embodiments of the invention, specifically various embodiments of the additive manufacturing unit 40, the foaming unit 50, and the footwear upper forming unit 58. To differentiate between them, reference numerals are supplemented with distinguishing letters specific to each embodiment of the respective manufacturing unit. Unless noted otherwise, the description emphasizes the differences between the embodiments, while identical or similar components, features, and functions may be taken over from the other embodiments.

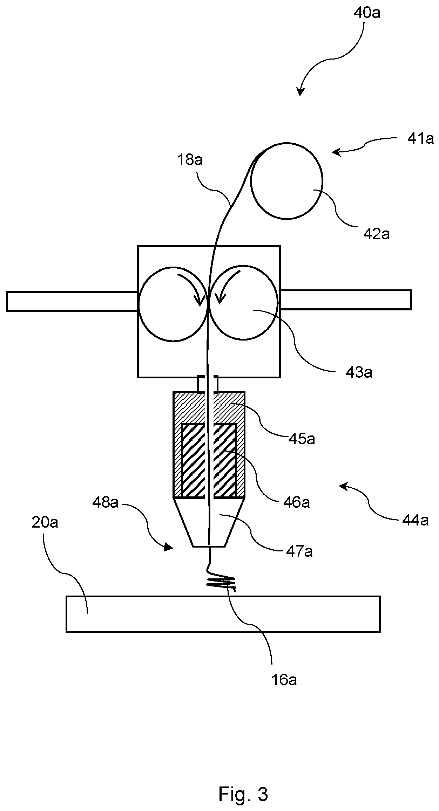

Figure 3 shows a schematic view of an additive manufacturing unit 40a of the manufacturing station 38 according to a first embodiment.

A sole element precursor 16a is formed by the additive manufacturing unit 40a, where a sole element material 18a is applied onto a shaping carrier 20a.

The additive manufacturing unit 40a comprises a feeding unit 41a, a liquefying unit 44a, a sole element material discharge unit 48a, and the shaping carrier 20a.

The feeding unit 41a comprises a spool 42a for feeding a sole element material 18a, in the form of a string, to a pair of feed gears 43a of the additive manufacturing unit 40a. The pair of feed gears 43a may be toothed and meshed together to grip and push the sole element material 18a to the liquefying unit 44a of the additive manufacturing unit 40a. The pair of feed gears 43a ensures a consistent and controlled flow of the sole element material 18a to the liquefying unit 44a.

The sole element material 18a is shown in the form of a string, however it may be in the form of granules, a powder, or in any applicable form. The sole element material 18a may be polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof.

The liquefying unit 44a comprises an extruder body 45a and an additive manufacturing heater 46a for heating the sole element material 18a to a suitable temperature. In operation, the sole element material 18a, in the form of a string is directed from the spool 42a to the pair of feed gears 43a, where it is gripped and pushed towards the liquefying unit 44a. In the liquefying unit 44a, the sole element material 18a is heated by the additive manufacturing heater 46a, until it reaches a liquid-like form.

The sole element material discharge unit 48a comprises an additive manufacturing nozzle 47a, from which the liquid-like sole element material 18a is discharged. The discharged sole element material 18a is applied to the shaping carrier 20a, forming the sole element precursor 16a.

The sole element precursor 16a is embodied as a midsole precursor. However, it would also be conceivable that the sole element precursor 16a is an outsole precursor. This applies to all sole element precursors described herein.

The shaping carrier 20a may comprise a surface intended for contact with the sole element precursor 16a. This surface may be flat, as shown in figure 3, or at least partially curved. The surface intended for contact with the sole element precursor 16a may be made from any suitable material such as, for example, aluminum, glass, ceramics, stainless steel, or any other applicable material. The shaping carrier 20a may comprise a rim (not shown) along or around the surface intended for contact with the sole element precursor 16a. The rim may be designed to guide and support the formation of the sole element precursor 16a, specifically a side surface of the sole element precursor 16a. The rim may be integrated into the shaping carrier 20a or may be a separable component.

The shaping carrier 20a may comprise at least one coating, which may comprise a polyetherimide, a polyimide, an adhesive, polytetrafluoroethylene (PTFE), or the like. The at least one coating of the shaping carrier 20a can improve the adhesion of the sole element precursor 16a with the shaping carrier 20a, facilitate the removal of the sole element precursor 16a from the shaping carrier 20a, and/or protect the shaping carrier 20a from any damage which may occur during the removal of the sole element precursor 16a.

The sole element precursor 16a, is removed from the shaping carrier 20a by the robotic handler 34 of the manufacturing station 38. The robotic handler 34 may comprise gripping means such that it can remove the sole element precursor 16a from the shaping carrier 34. The gripping means may be pneumatic, magnetic and/or electrostatic. The robotic handler 34 transfers the sole element precursor to the following manufacturing unit.
Alternatively, the sole element precursor 16a may stay fixed to the shaping carrier 20a, in particular to the surface of the shaping carrier 20a intended for contact with the sole element precursor 16a. In this case, the robotic handler 34 may pick-up the sole element precursor 16a together with the shaping carrier 20a and transfer both to the following manufacturing unit of the manufacturing station 38.

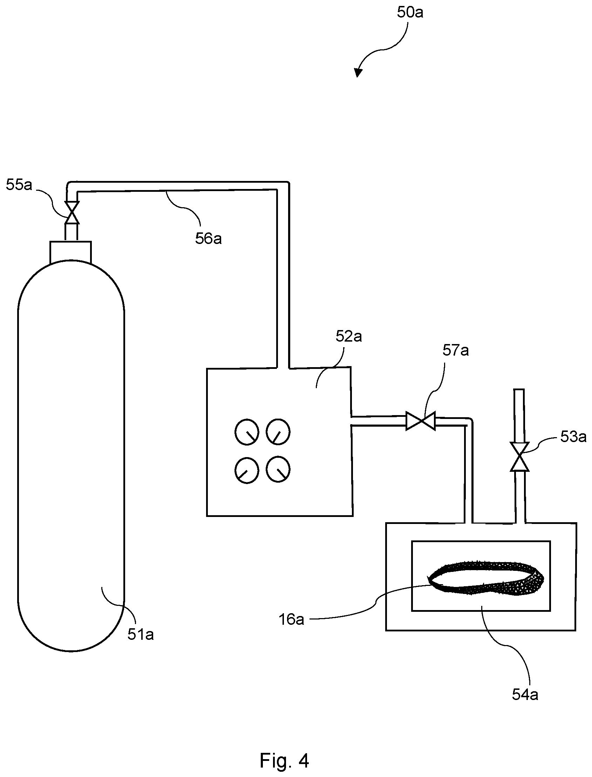

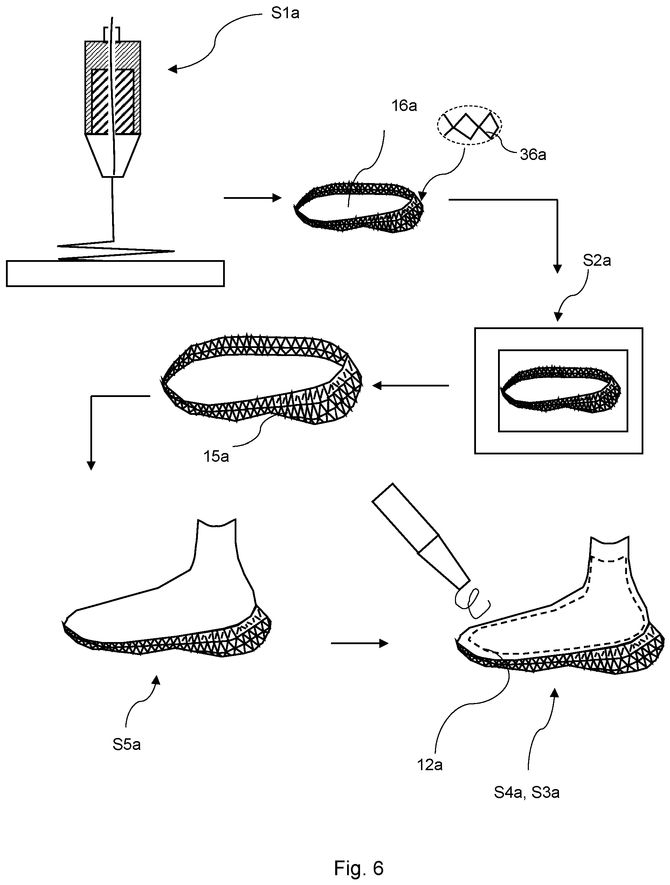

Figure 4 shows a schematic view of a foaming unit 50a of the manufacturing station 38 according to a first embodiment, for physically foaming the sole element precursor 16a. Herein, the sole element precursor 16a, in particular the midsole precursor, is physically foamed such that at least one sole element 15a (cf. figure 6) is formed.

The foaming unit 50a comprises a heating chamber 54a, a gas tank 51a, a gas pressure regulator 52a and a gas supply line 56a.

The heating chamber 54a receives the sole element precursor 16a from the robotic handler 34 of the manufacturing station 38. The heating chamber 54a is equipped with an access opening through which the sole element precursor 16a is inserted. In some embodiments, the sole element precursor 16a and the shaping carrier 20a are both inserted through the access opening. Once the sole element precursor 16a, possibly together with the shaping carrier 20a, is placed inside the heating chamber 54a, the access opening is closed and sealed to ensure that heat and gas remain contained within the heating chamber 54a.

After the access opening is closed and sealed, a controlled amount of gas is supplied from the gas tank 51a, which contains a gas such as, for example, CO₂ or N₂, to fill and pressurize the heating chamber 54a. The gas contained in the gas tank 51a is a physical foaming agent, which is dissolved in the sole element precursor 16a when the sole element precursor 16a is inside the heating chamber 54a. The gas tank 51a comprises an inlet valve 55a, which releases gas to the gas supply line 56a as required.

The inlet valve 55a is controlled to allow the gas to be released from the gas tank 51a. The gas travels through the gas supply line 56a to the gas pressure regulator 52a. The gas pressure regulator 52a controls and regulates the pressure of the gas as it supplied to the heating chamber 54a. The temperature and/or the pressure of the heating chamber 54a are controlled such that the gas is diffused into the sole element precursor 16a.

Over time the sole element precursor 16a is saturated with the gas. A temperature and/or a pressure and/or a cycle time inside the heating chamber 54a may differ depending from the sole element material 18a forming the sole element precursor 16a and/or the employed physical foaming agent. In one embodiment, the heating chamber 54a may operate at a temperature range of 130°C to 137°C and the pressure may be kept withing the range of 20 MPa to 25 MPa. The step of foaming may be performed at a cycle time of 4 hours to 6 hours. In some embodiments, the step of foaming may comprise free foaming the sole element precursor 16a. In this case, the step of foaming may be conducted under strictly controlled process parameters.

The gas supply line 56a comprises an insulation valve 57a for separating different sections of the gas supply line 56a for maintenance and/or safety. After the sole element precursor 16a is saturated with the supplied gas, an exhaust valve 53a of the foaming unit 50a is opened, as a result, the pressure in the heating chamber 54a drops quickly foaming the sole element precursor 16a, forming therefore the at least one sole element 15a, in particular a midsole. Afterwards, the robotic handler 34 of the manufacturing station 38, removes the at least one sole element 15afrom the heating chamber 54a. If the at least one sole element 15a is still fixed to the shaping carrier 20a, first the robotic handler 34 removes the at least one sole element 15a from the shaping carrier 20a and then transfers it to the following manufacturing unit.

Once the at least one sole element 15a, possibly together with the shaping carrier 20a, is removed from the heating chamber 54a, it is placed in a fixing unit (not shown) of the manufacturing unit 38. In the fixing unit, the at least one sole element 15a is affixed to a footwear last 22a, magnetically, adhesively, by vacuum, and/or electrostatically. This may be done manually or preferably automatically.

Optionally, a compression mold (not shown) of the foaming unit 50a may be used to obtain the final shape of the at least one sole element 15a.

The robotic handler 34 may comprise attaching means, such that it may pick up the footwear last 22a and the at least one sole element 15a fixed thereto, from the fixing unit. The robotic handler 34 may then transfer the footwear last 22a and the at least one sole element 15a from the fixing unit to the next manufacturing unit. The connection between the robotic handler 34 and the footwear last 22a may be detachable so that the robotic handler 34 may be connected to other footwear lasts, too.

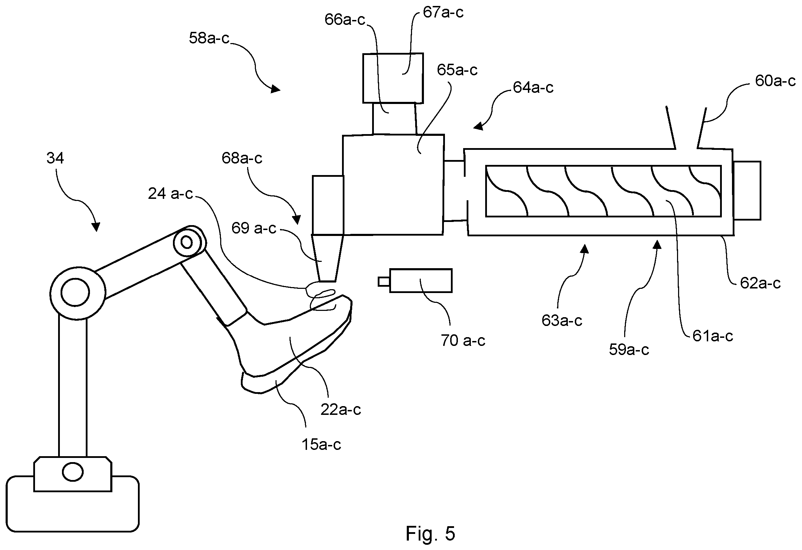

Figure 5 shows a schematic view of a footwear upper forming unit 58a-c of the manufacturing station according to a first, second, and third embodiment.

The footwear upper forming unit 58a comprises a filament supply unit 60a, a dosing unit 64a, a melting unit 63a, and a filament discharge unit 65a having a thermoplastic filament discharge nozzle 69a. The robotic handler 34 of the manufacturing station 38, moves the footwear last 22a with the at least one sole element 15a attached thereto to the footwear upper forming unit 58a. The footwear upper forming unit 58a is configured to form a footwear upper 12a onto the footwear last 22a by applying at least one thermoplastic filament 24a onto the footwear last 22a to form a plurality of path segments 26, in particular loops 28, along an application path 30.

The at least one thermoplastic filament 24a is supplied from the filament supply unit 60a to the melting unit 63a. The melting unit 63a is configured to melt the at least one thermoplastic filament 24a and then eject it via the thermoplastic filament discharge nozzle 69a. The melting unit 63a comprises an extruder 59a having a barrel 62a and a screw 61a which is arranged in the barrel 62a. For melting the at least one thermoplastic filament 24a in the extruder 59a, the melting unit 63a comprises a material heating unit (not shown).

The at least one thermoplastic filament 24a may comprise any suitable material, in particular a thermoplastic polymer and/or polymer composition, for example polyamide, polyester, polyether block amide (PEBA), for example PEBAX^{®} (Arkema), thermoplastic polyurethane (TPU), ethylene vinyl acetate (EVA), polyolefin, such as polyethylene or polypropylene, or combinations thereof.

The thermoplastic filament discharge nozzle 69a is configured to dispense the molten thermoplastic filament 24a. The dosing unit 64a comprises a pump 66a, a pump drive 67a to drive the pump 66a and a dosing head 65a. The pump 66a generates pressure for dispensing the at least one molten thermoplastic filament 24a through the thermoplastic filament discharge nozzle 69a. The pump 66a is configured to control, in particular fine tune, the output pressure of the at least one thermoplastic filament 24a through the thermoplastic filament discharge nozzle 69a.

The thermoplastic filament discharge nozzle 69a comprises a plurality of gas discharge openings (not shown), through which a flow of gas, in particular compressed air, is ejected. The flow of gas ejected by the gas discharge openings is used to influence thermoplastic filament 24a emerging from the thermoplastic filament discharge nozzle 69a to form a helical shape. A similar system and method of forming helical shaped filaments is disclosed, for example, in WO 2022/069583 A1.

The application path 30 is scanned by the robotic handler 34, which moves the footwear last 22a and the at least one sole element 15a, in particular midsole, relative to the stationary thermoplastic filament discharge nozzle 69a of the footwear upper forming unit 58a.

The footwear upper forming unit 58a may comprise a heating element 70a for heating the footwear last 22a, prior and/or while applying the at least one thermoplastic filament 24a. The heating element may be, for example, a hot air blower, an IR-irradiation unit, a laser, or any other applicable heating element.

As the at least one thermoplastic filament 24a is applied, it forms the plurality of path segments 26, in the form of the plurality of loops 28 along the application path 30.

The robotic handler 34 may control the application path 30 of the at least one thermoplastic filament 24a when applying it onto the footwear last 22a. The robotic handler 34 is configured to generate a relative movement of the footwear last 22a relative to the thermoplastic filament discharge unit 68a, in particular the thermoplastic filament discharge nozzle 69a. The at least one thermoplastic filament 24a is ejected in a helical form so that the plurality of loops 28 formed along the application path 30 are fused together, thereby forming the footwear upper 12a. The at least one thermoplastic filament 24a is partly applied onto the sole element15a, in particular onto a side surface of the at least one sole element 15a.

The robotic handler 34 may also be configured to move the footwear last 22a, the at least one sole element 15a, and the footwear upper 12a during the manufacturing process between different manufacturing units (not shown) of the manufacturing station 38.

Figure 6 shows a schematic of a method for automated manufacturing the article of footwear using the manufacturing station 38 and its first embodiments of the additive manufacturing unit 40a, the foaming unit 50a, and the footwear upper forming unit 58a.

In a step S1a the at least one sole element precursor 16a is formed by the additive manufacturing unit 40a (cf. figure 3). In the step S1 the sole element precursor 16a is formed onto the shaping carrier 20a of the additive manufacturing unit 40a.

The additive manufacturing nozzle 47a deposits a plurality of layers to the shaping carrier 20a for forming the sole element precursor 16a. The sole element precursor 16a, in particular the midsole precursor, may comprise a plurality of recurring cell units 36 designed in advance using a CAD software program (not shown) of the manufacturing station 38. The recurring cell units 36 structure may be a strut-based structure and/or a surface-based structure. The recurring cell units may have different shapes, in addition to the recurring cell units 36 shown in figure 6.

After the step S1a of forming the sole element precursor 16a is finalized, a step S2a of foaming the sole element precursor 16a is performed. In the step S2a of foaming the sole element precursor 16a, the sole element precursor 16a, possibly together with the shaping carrier 20a is inserted into the heating chamber 54a of the foaming unit 50a (cf. figure 4), by the robotic handler 34 of the manufacturing station 38. As a result, the sole element precursor 16a is foamed, forming therefore the at least one sole element 15a, in particular the midsole. The at least one sole element 15a is removed from the heating chamber 54a by the robotic handler 34 and it is then fixed to the footwear last 22a. Thus, a step S5a of fixing the at least one sole element 15a to the footwear last 22a is performed.

Optionally, a compression mold (not shown) of the foaming unit 50a may be used to obtain the final shape of the at least one sole element 15a.

Afterwards, the robotic handler 34 transfers the at least one sole element 15a to the fixing unit of the manufacturing station 38.

The robotic handler 34 picks up the footwear last 22a and the at least one sole element 15a affixed thereto and transfers it to the footwear upper forming unit 58a (cf. figure 5). In the footwear upper forming unit 58a, a step S4a of forming the footwear upper 12a is performed.

The step S4a of forming the footwear upper 12a comprises applying the at least one thermoplastic filament 24a onto the footwear last 22a along the application path 30 (cf. figure 5).

During the step S4a of forming the footwear upper 12a, the at least one thermoplastic filament 24a is partly applied onto the at least one sole element 15a, in particular onto a side surface of the at least one sole element 15a, in particular the midsole. Thus, the step S4a of forming the footwear upper is performed simultaneously to a step S3a of connecting the sole element15a to the footwear upper 12a.

Before or after the step S3a is performed, the outsole 17 is connected to the at least one sole element 15a, in particular the midsole (not shown). The outsole 17 may be molded or additive manufactured onto the at least one sole element 15a. Alternatively, the outsole may be pre-fabricated, for example by molding and/or additive manufacturing, and then applied to the at least one sole element 15a, in particular by welding, gluing, or any applicable method. The outsole 17 may be similar for each embodiment disclosed herein.

After the step S3 of connecting the at least one sole element 15a to the footwear upper 12a is performed, an article of footwear precursor is obtained. The robotic handler 34 may transfer the article of footwear precursor to the further manufacturing unit 72 (cf. figure 2) of the manufacturing station 38, such that other manufacturing steps are performed.

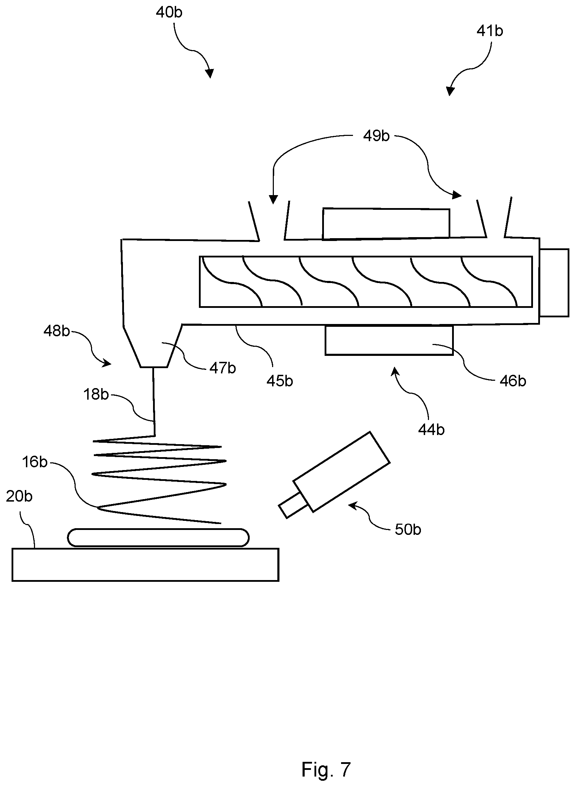

Figure 7 shows a schematic view of an additive manufacturing unit 40b and a foaming unit 50b of the manufacturing station 38 according to a second embodiment.

A sole element precursor 16b is formed by the additive manufacturing unit 40b and at least one sole element 15b is formed by the foaming unit 50b.

The additive manufacturing unit 40b depicted in figure 7 comprises a feeding unit 41b, a liquefying unit 44b, a sole element material discharge unit 48b and a shaping carrier 20b.

The feeding unit 41b comprises two hoppers 49b. From one hopper 49b a raw sole element material is supplied to an extruder body 45b of the liquefying unit 44b. The raw sole element material may be any of thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The raw sole element material may be in a form of a string, granules, a powder, or any other applicable form. From the other hopper 49b a chemical and/or physical foaming agent is supplied to the extruder body 45b.

The liquefying unit 44b comprises an additive manufacturing heater 46b for heating the raw sole element material into a liquid-like form. In the extruder body 45b the raw sole element material is heated and mixed with the foaming agent, such that the foaming agent is evenly distributed in the raw sole element material, forming therefore a sole element material18b.

In operation, the sole element material 18b is directed in a liquid-like form to the sole element material discharging unit 48b. The sole element material discharge unit 48b comprises an additive manufacturing nozzle 47b. Upon exiting the additive manufacturing nozzle 47b, a temperature of the additive manufacturing nozzle 47b and a pressure at the exit of the additive manufacturing nozzle 47b are controlled by the control unit 71 of the manufacturing station 38 such that the foaming agent would not be pre-activated. The foaming unit 50b is in proximity with the additive manufacturing unit 40b and they operate in parallel. The foaming unit 50b is a heating unit. The foaming unit 50b may be a hot air blower and/or an IR-irradiation unit and/or laser and/or any other applicable heater.

In operation, the additive manufacturing nozzle 47b dispenses the sole element material 18b onto the shaping carrier 20b according to a first application scheme (not shown) forming a first sole element layer, of the sole element precursor 16b onto the shaping carrier 20b. Once the first sole element layer is applied, the foaming unit 50b activates the foaming agent present in the sole element material 18b, therefore forming a first layer of the at least one sole element 15b. Once the first sole element layer is applied and foamed, the sole element material 18b is then applied onto the shaping carrier 20b and/or the first layer of the at least one sole element 15b, according to a second application scheme. As a result, a second sole element layer of the sole element precursor is formed onto the shaping carrier 20b and/or the already formed first layer. The second sole element layer, is foamed by the foaming unit 50b, forming therefore the second layer of the at least one sole element 15b.These steps may be repeated until the complete at least one sole element 15b is formed.

In this embodiment, a chemical foaming agent may be used. Alternatively, as physical foaming agent an inert gas, like CO₂ or N₂, may be used. As chemical foaming agent any of azodicarbonamide (ADC), sodium bicarbonate hydrazine derivates, or the like may be conceived.

The at least one sole element 15b may be removed directly from the shaping carrier 20b. After the at least one sole element 15b is formed, the robotic handler 34 removes it from the shaping carrier 20b and transfers it to a fixing unit (not shown) of the manufacturing station 38.

Optionally, a compression mold (not shown) of the foaming unit 50b may be used to obtain the final shape of the at least one sole element 15b.

As previously described, the robotic handler 34 may comprise gripping means for removing the at least one sole element 15b from the shaping carrier 20b. The shaping carrier 20b is identical with the shaping carrier 20a. In the fixing unit, the at least one sole element 15b may be affixed to a footwear last 22b, magnetically, adhesively, by vacuum and/or electrostatically.

Once the at least one sole element 15b is fixed to the footwear last 22b, the robotic handler 34, picks-up the footwear last 22b together with the at least one sole element 15b fixed thereto, and transfers it to a footwear upper forming unit 58b, which is identical with the footwear upper forming unit 58a described with respect to figure 4. The footwear upper forming unit 58b is configured to form a footwear upper 12b, according to a second embodiment.

The description of the footwear upper forming unit 58a is also valid for the footwear upper forming unit 58b. Once the robotic handler 34 moves the footwear last 22b and the at least one sole element 15b to the footwear upper forming unit 58b, the footwear upper 12b is formed on the footwear last 22b.

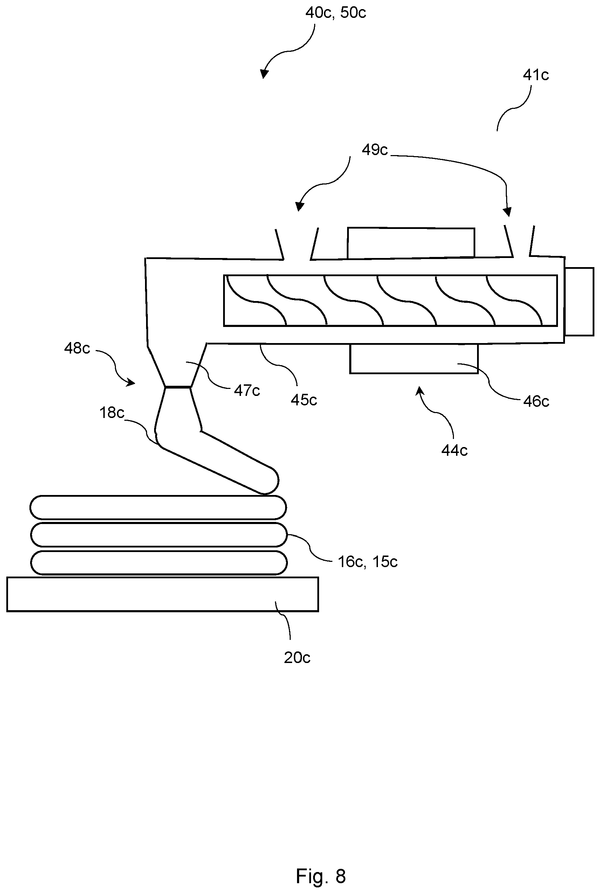

Figure 8 shows a schematic view of an additive manufacturing unit 40c and a foaming unit 50c of the manufacturing station 38 according to a third embodiment. The additive manufacturing unit 40c and the foaming unit 50c are integrated with each other, forming one common manufacturing unit.

The additive manufacturing unit 40c comprises a feeding unit 41c, a liquefying unit 44c, a sole element material discharge unit 48c and a shaping carrier 20c, identical as in figure 7.

In operation, a raw sole element material, similar with the one described above, is supplied from a first hopper 49c of the feeding unit 41c to an extruder body 45c. A foaming agent, physical and/or chemical, is introduced from a second hopper 49c of the feeding unit 41c. The raw sole element material is melted and mixed with a chemical and/or physical foaming agent, as described above, and it is directed to an additive manufacturing nozzle 47c of a sole element material discharge unit 48c. The control unit 71 of the manufacturing station 38 controls a temperature and a pressure of the sole element material 18c, while it is inside the liquefying unit 44c, so that an activation of the foaming agent does only occur when the sole element material 18c is dispensed from the additive manufacturing nozzle 47c. The sole element material 18c is applied and foamed at the same time onto a shaping carrier 20c, forming therefore a sole element precursor 16c and a sole element 15c at the same time.

A temperature of the additive manufacturing nozzle 46c may be moderated relative to a temperature inside of the extruder body 45c of the additive manufacturing unit 40c. The temperature of the additive manufacturing nozzle 46c may be higher than the temperature inside of the extruder body 45c. The chemical and/or physical foaming agent may stay inactive when the sole element material 18c is inside the extruder body 45c of the manufacturing station 38. This is due to a high pressure inside the extruder body 45c. Upon the sole element material 18c exiting the additive manufacturing nozzle 45c, the pressure decreases. As a result of this, the sole element material 18c infused with the chemical and/or physical foaming agent is foamed, forming therefore the at least one sole element 15c.

After the at least one sole element 15c is formed, the robotic handler 34 removes it from the shaping carrier 20c and transfers it to a fixing unit (not shown) of the manufacturing station 38.

Optionally, a compression mold (not shown) of the foaming unit 50c may be used to obtain the final shape of the at least one sole element 15c.

The robotic handler 34 may comprise gripping means, as previously explained, for removing the at least one sole element 15c from the shaping carrier 20c. In the fixing unit, the at least one sole element 15c may be affixed to a footwear last 22c, magnetically, adhesively, by vacuum and/or electrostatically.

The robotic handler 34, picks-up the footwear last 22c with the at least one sole element 15c fixed thereto from the fixing unit, and transfers it to the footwear upper forming unit 58c, which is identical with the footwear upper forming unit 58a described with respect to figure 4. The footwear upper forming unit 58c is configured to form a footwear upper 12c, according to a third embodiment.

The description of the footwear upper forming unit 58a, outlined above, also applies for the footwear upper forming unit 58c. Once the robotic handler 34 moves the footwear last 22c and the at least one sole element 15c to the footwear upper forming unit 58c, the footwear upper 12c is formed on the footwear last 22c.

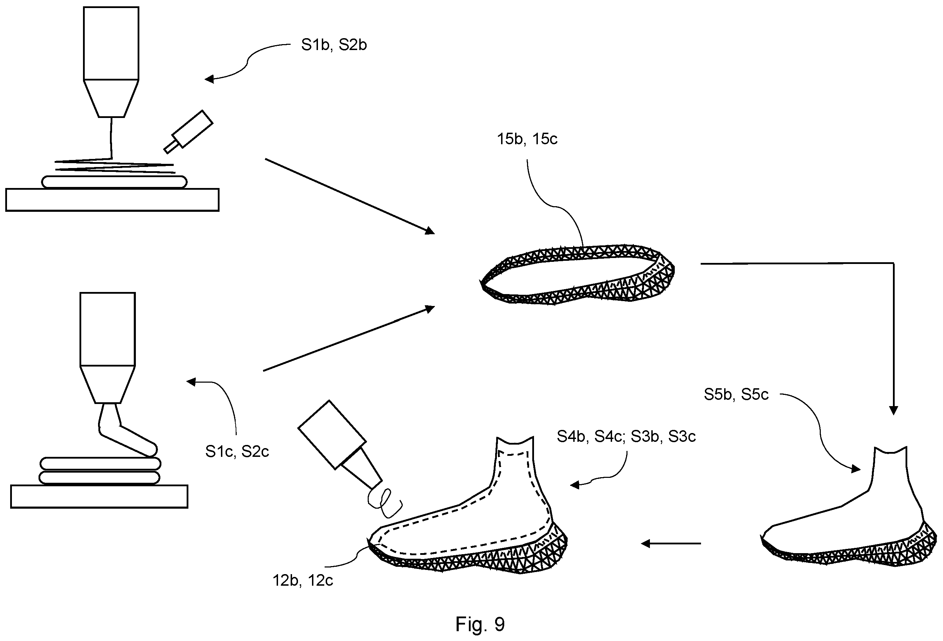

Figure 9 shows a schematic of methods for manufacturing the article of footwear using the manufacturing station 38 and its second or third embodiments of the additive manufacturing unit 40b, 40c and foaming unit 50b, 50c, and its second and third embodiments of the footwear upper forming unit 58b, 58c.

According to one embodiment, a step S1b of forming the sole element precursor 16b is performed by the additive manufacturing unit 40b. In the step S1b of forming the sole element precursor 16b, a foaming agent is incorporated into the raw sole element material, such that a sole element material 18b is formed.

In the step S1b, the sole element material 18b is deposited onto the shaping carrier 20b according to an application scheme, as described in figure 7. Every sole element layer is foamed by the foaming unit 50b of the manufacturing station 38, which activates the foaming agent in the sole element material 18b. As a result, a step S2b of foaming the sole element precursor 16b is performed in parallel with the step S1b of forming the sole element precursor 16b.

After the step S1b of forming the sole element precursor 16b and the step S2b of foaming the sole element precursor 16b are performed, a step S5b of fixing at least one sole element 15b to a footwear last 22b is performed. The robotic handler 34 of the manufacturing unit 38 picks up the footwear last 22b and the at least one sole element 15b fixed thereto from the fixing unit of the manufacturing unit 38 and transfers it to the footwear upper forming unit 58b.

In the footwear upper forming unit 58b a step S4b of forming the footwear upper 12b is performed. The step S4b of forming the footwear upper 12b is performed identical as the step S4a described above. The step S4b is performed simultaneously with a step S3b of connecting the at least one sole element 15b, in particular the midsole, to the footwear upper 12b.

Figure 9 further illustrates another embodiment, in which a step S1c of forming the sole element precursor 16c is performed by the additive manufacturing unit 40c (cf. figure 8). In the step S1c of forming the sole elect precursor 16c, the sole element material 18c is dispensed onto the shaping carrier 20c.

In this embodiment, upon exiting the additive manufacturing nozzle 47c of the additive manufacturing unit 40c, a temperature and a pressure of the sole element material 18c, at the exit of the additive manufacturing nozzle 46c are controlled by the control unit 71 of the manufacturing station 38 such that a foaming agent would be activated upon exiting the additive manufacturing nozzle 47c.

As a result, the step S1c of forming the sole element precursor 16c and a step S2c of foaming the sole element precursor 16c are performed simultaneously in one single step. As an illustration, the sole element precursor 16c and the at least one sole element 15c are indicated by the same arrow in figure 8.

When the steps S1c and S2c are finalized, a step S5c of fixing the at least one sole element 15c to the footwear last 22c is performed.

Afterwards, the robotic handler 34 transfers the at least one sole element 15c to the fixing unit of the manufacturing station 38.

A step S4c of forming the footwear upper 12c, and a step S3c of connecting the at least one sole element 15c to the footwear upper 12c may be performed in this exact order, identical to the steps S4b, and S3b previously described.

The outsole 17 may be connected to the at least one sole element 15b, 15c as previously described with respect to figure 6.

After the steps S3b, S3c of connecting the at least one sole element 15b, 15c to the footwear upper 12b, 12c are performed, an article of footwear precursor is obtained. The robotic handler 34 may transfer the article of footwear precursor to the further manufacturing unit 72 (cf. figure 2) of the manufacturing station 38, such that other manufacturing steps may be performed.

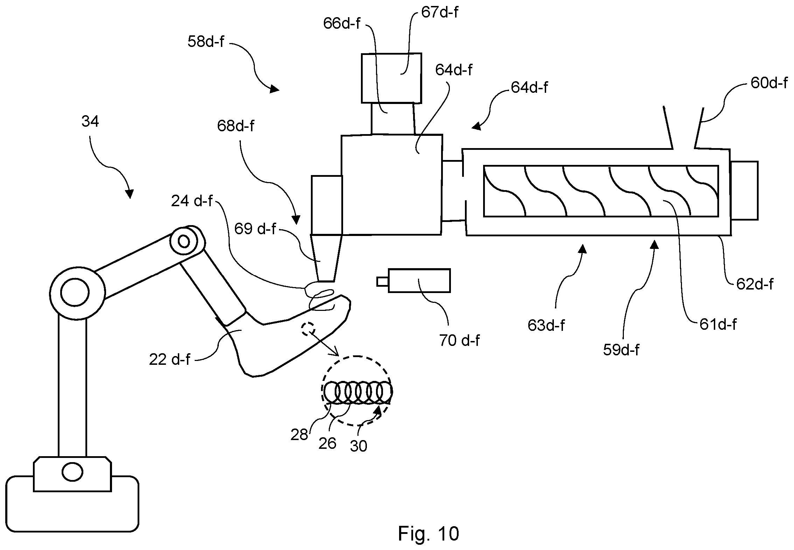

Figure 10 shows a schematic view of a footwear upper forming unit 58d-f of the manufacturing station 38 according to a fourth, fifth and sixth embodiment.

In figure 10, the footwear upper forming unit 58d comprises a filament supply unit 60d, a melting unit 63d, a dosing unit 64d, and a thermoplastic filament discharge unit 68d that are identical with the respective units of the footwear upper forming units 58a-c as described above with respect to figure 5.

A footwear upper 12d is formed by applying a thermoplastic filament 24d onto a footwear last 22d, which is connected to the robotic handler 34 of the manufacturing station 38.

The embodiments described with respect to figure 10 differ from those of figure 5 in that the robotic handler 34 transfers only a footwear last 22d without any sole material attached thereto, as in figure 5. In this embodiment a shaping carrier 20d is the footwear last 22d. The robotic handler 34 is configured to move only the footwear last 22d relative to the stationary thermoplastic filament discharge unit 68d of the footwear upper forming unit 58d. The thermoplastic filament 24d is then applied onto the footwear last 22d to form a plurality of path segments 26, in particular loops 28, along an application path 30. As a result, the footwear upper 12d is formed. The footwear upper 12e, 12f are formed identically the same onto respective footwear lasts 22e, 22f.

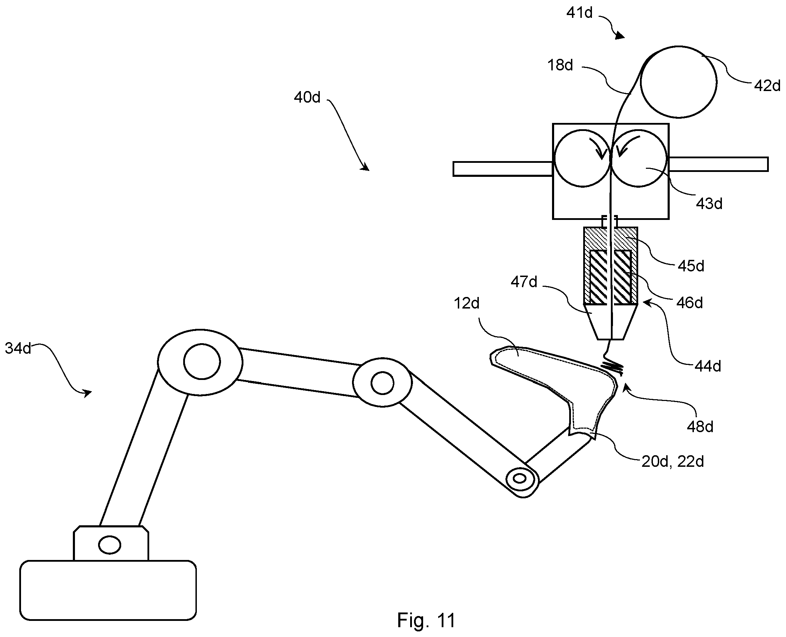

Figure 11 shows a schematic view of an additive manufacturing unit 40d of the manufacturing station 38, according to a fourth embodiment, for forming a sole element precursor 16d. The additive manufacturing unit 40d comprises a feeding unit 41d, a liquefying unit 44d, and a sole element material discharge unit 48d identical to those of the additive manufacturing unit 40a.

However, this embodiment differs in that the sole element precursor 16d is formed onto the footwear last 22d. The footwear last 22d receives the sole element material 18d from the sole element material discharge nozzle 48d. In operation, the robotic handler 34 of the manufacturing station 38 is connected to the footwear last 22d and transfers it together with the footwear upper 12d formed thereto to the additive manufacturing unit 40d. The sole element material 18d is dispensed from an additive manufacturing nozzle 47d onto a bottom and/or side surface of the footwear last 22d, in particular at and/or onto an underside of the footwear upper 12d. As a result, the sole element precursor 16d is formed.

The footwear last 22d may be made from steel, resin, foam, composite materials, rubber, and/or the like. The footwear last 22d may comprise at least one coating for improving its mechanical properties, specifically its heat resistance. The robotic handler 34 may grip and/or lift and/or rotate and/or release the footwear last 22d for streamlining the manufacturing process.

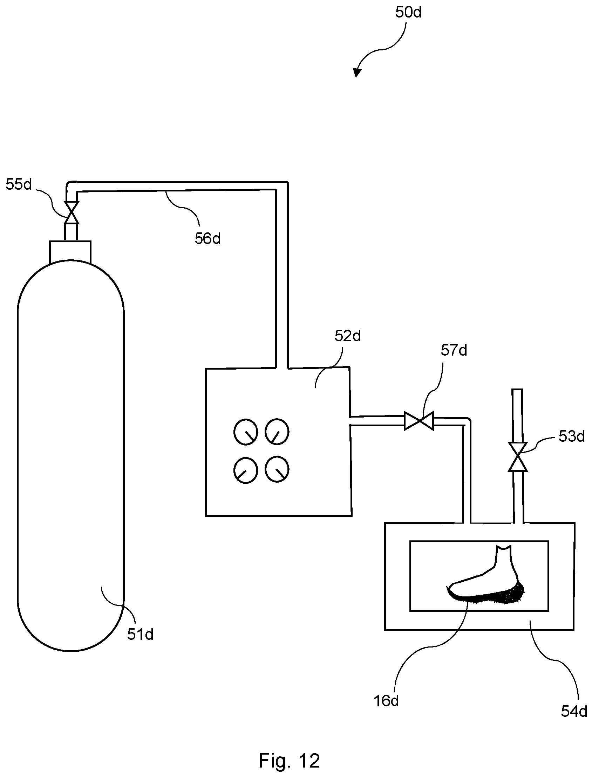

Figure 12 illustrates a schematic view of a foaming unit 50d of the manufacturing station 38 according to a fourth embodiment for physically foaming the sole element precursor 16d.

The foaming unit 50d comprises a heating chamber 54d, a gas tank 51d, a pressure regulator 52d, a gas supply line 56d, an inlet valve 55d, an isolation valve 57d and an exhaust valve 53d which are identical to those of the foaming unit 50a shown in figure 4. The robotic handler 34 transfers the footwear last 22d with the footwear upper 12d and the sole element precursor 16d formed thereto, to the foaming unit 50d. In this embodiment, the sole element precursor 16d is attached to the footwear last 22d and is inserted therefore to the heating chamber 54d together with the footwear last 22d and the footwear upper 12d applied thereto, by the robotic handler 34.

In such a case, the footwear upper 12d may comprise a coating, which may be temporary and which is applied to the footwear upper 12d before it is inserted in the heating chamber 54d. The coating may be heat resistant and may prevent the footwear upper 12d to be foamed, when the heating chamber 54d is filled with a foaming agent, and the pressure from the heating chamber 54d is decreased.

In addition, the footwear upper 12d may comprise a shield for covering it, such that it is not foamed when placed in the heating chamber 54d. The coating and/or the shield may act as a barrier for the introduced foaming agent. The footwear upper 12d may be coated with a coating material such as silicone, polyvinyl alcohol (PVA), polytetrafluoroethylene (PTFE),p or the like. The footwear upper 12d may also comprise a material which is not or only negligibly saturated with the foaming agent.

While the footwear last 22d with the sole element precursor 16d and the footwear upper 12 is inside the heating chamber 54d, the sole element precursor 16d is saturated over time with the foaming agent filling up the heating chamber 54d. In one embodiment, the heating chamber 54d may operate at a temperature range 130°C to 137°C and the pressure may be kept withing the range of 20 MPa to 25 MPa. The foaming may be performed at a cycle time of 4 hours to 6 hours. After the sole element precursor 16d is saturated with the foaming agent, the pressure in the heating chamber 54d is decreased which results in foaming of the sole element precursor 16d, forming therefore the at least one sole element 15d. Due to the coating and/or shield the footwear upper 12d remains unfoamed. In some embodiments, the foaming process may comprise free foaming the sole element precursor 16d. In this case, process parameters of the foaming process are strictly controlled. The robotic handler 34, removes then the footwear last 22d with the footwear upper 12d and the at least one sole element 15d, in particular a midsole, from the heating chamber 54d.

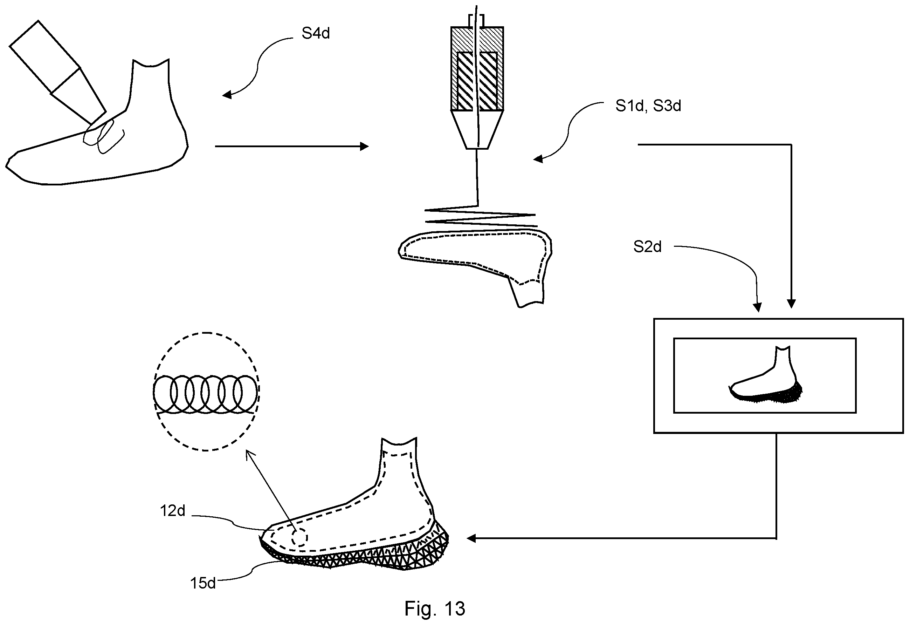

Figure 13 shows a schematic of a method for manufacturing the article of footwear using the manufacturing station 38 and its fourth embodiments of the additive manufacturing unit 40d, the foaming unit 50d, and the footwear upper forming unit 58d.

A step S4d of forming the footwear upper 12d is performed by the footwear upper forming unit 58d (cf. figure 10). The footwear upper 12d is formed by applying the at least one thermoplastic filament 24d onto the footwear last 22d to form a plurality of path segments 26 in the form of a plurality of loops 28 along the application path 30. The application path 30 is scanned by the robotic handler 34, which moves the footwear last 22d relative to the stationary thermoplastic filament discharge nozzle 69d of the footwear upper forming unit 58d. The at least one thermoplastic filament 24d is ejected in a helical form so that the plurality of loops 28 formed along the application path 30 are fused together. Therefore, forming the footwear upper 12d.

After the step S4 of forming the footwear upper 12d is performed, the robotic handler 34 of the manufacturing station 38, moves the footwear last 22d together with the footwear upper 12d applied thereto, to the additive manufacturing unit 40d, such that a step S1d of forming the sole element precursor 16d is performed. A step S3d of connecting the at least one sole element 15d to the footwear upper 12d is performed simultaneously with the step S1d of applying the sole element precursor 16d at and/or on the underside of the footwear upper 12d. The step S3d of connecting the at least one sole element 15d to the footwear upper 12d is achieved by a thermal bond between the applied liquid-like sole element material 18d and the footwear upper 12d.

The step S1d of forming the sole element precursor 16d comprises dispensing the sole element material 18d from the additive manufacturing nozzle 47d of the sole element material discharge unit 48d to the footwear last 22d.The additive manufacturing nozzle 47d dispenses the sole element material 18d at and/or on the underside of the footwear upper 12d, forming the sole element precursor 16d.

After the step S1d is performed, the footwear last 22d with the footwear upper 12d and the sole element precursor 16d formed thereto, is inserted in the heating chamber 54d of the foaming unit 50d (cf. figure 12) for executing a step S2d of foaming the sole element precursor 16d, forming the at least one sole element 15d, in particular a midsole. After the step S2d of foaming the sole element precursor 16d is finalized, the robotic handler 34 removes the footwear last 22d together with the footwear upper 12d and the at least one sole element 15d formed thereto from the heating chamber 54d.

After the step S3d of connecting the at least one sole element 15d to the footwear upper 12d is performed, an article of footwear precursor is obtained. The robotic handler 34 may transfer the article of footwear precursor to the arbitrary unit further manufacturing unit 72 (cf. figure 2) of the manufacturing station 38, such that further manufacturing steps are performed.

The outsole 17 is connected to the at least one sole element 15d as described above with respect to figure 6.

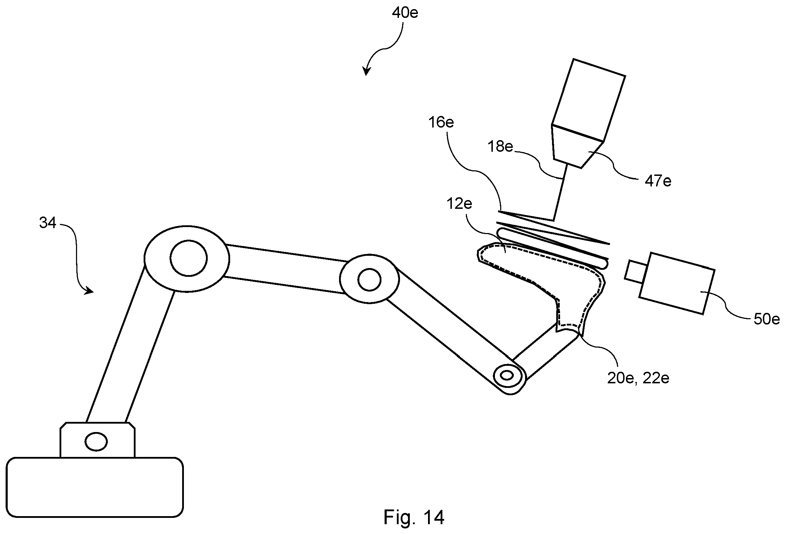

Figure 14 shows a schematic view of an additive manufacturing unit 40e and a foaming unit 50e of the manufacturing station 38 according to a fifth embodiment.

The additive manufacturing unit 40e comprises a feeding unit, a liquefying unit and a sole element material discharge unit identical with those of the additive manufacturing unit 40b described in figure 7. Several of these units are not shown in figure 14 for simplification. A sole element material 18e employed in this embodiment, comprises a raw sole element material and a physical and/or chemical foaming agent as described above in figure 7.

As in the embodiment of figure 11, a sole element material 18e is applied directly onto a bottom and/or side surface of a footwear last 22e. In this embodiment a footwear last 22e is used as shaping carrier 20e.

The robotic handler 34 of the manufacturing station 38 transfers the footwear last 22e to the additive manufacturing unit 40e after a footwear upper 12e is formed by the footwear upper forming unit 58e. The footwear upper forming unit 58e as described in figure 10 is configured to form the footwear upper 12e according to a fifth embodiment. The description of the footwear upper forming unit 58d, outlined above, also applied to the footwear upper forming unit 58e. Once the robotic handler 34 moves the footwear last 22e to the footwear upper forming unit 58e, the footwear upper 12e is formed on the footwear last 22e.

The robotic handler 34 of the manufacturing station 38 is configured to move the footwear last 22e with the footwear upper 12e formed thereto, close to an additive manufacturing nozzle 47e of the additive manufacturing unit 40e, as shown in figure 14, such that a sole element material 18e may be dispensed onto a bottom and/or side surface of the footwear last 22e, in particular at and/or onto the underside of the footwear upper 12e.

The foaming unit 50e is identical with the foaming unit 50b of figure 7. In operation, the foaming unit 50e activates a foaming agent being part of the sole element material 18e after one layer of the sole element material 18e is applied and/or after a plurality of layers of the sole element material 18e are applied, forming therefore the at least one sole element 15e. This embodiment differs from the embodiment of figure 7 in that the sole element material 18e is applied and foamed layer by layer directly on the bottom and/or side surface of the footwear last 22e. As a result, the at least one sole element 15e is formed.

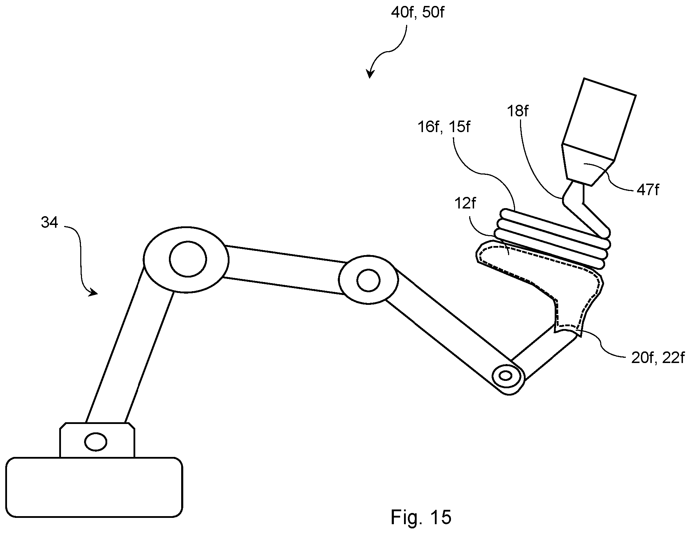

Figure 15 shows a schematic view of an additive manufacturing unit 40f and a foaming unit 50f of the manufacturing station 38 according to a sixth embodiment. The additive manufacturing unit 40f and the foaming unit 50f are integrated with each other in one common manufacturing unit. Several units are not shown in figure 15 for simplification. A sole element material 18f employed in this embodiment comprises a raw sole element material and a physical and/or chemical foaming agent as described above.

The additive manufacturing unit 40f and the foaming unit 50f are identical with the additive manufacturing unit 40c and the foaming unit 50c as described above and shown in figure 8. The robotic handler 34 of the manufacturing station 38 transfers a footwear last 22f to the additive manufacturing unit 40f after a footwear upper 12f is formed by the footwear upper forming unit 58f. The footwear upper forming unit 58e is described in figure 10 and it is configured to form the footwear upper 12f according to a sixth embodiment. The same description of the footwear upper forming unit 58d, outlined above, also applies for the footwear upper forming unit 58f. Once the robotic handler 34 moves the footwear last 22f to the footwear upper forming unit 58f, the footwear upper 12f is formed on the footwear last 22f.

The robotic handler 34 of the manufacturing station 38 is configured to move the footwear last 22f with the footwear upper 12f formed thereto, close to an additive manufacturing nozzle 47f of the additive manufacturing unit 40f, shown in figure 15, such that a sole element material 18f may be dispensed onto a bottom and/or side surface of the footwear last 22f, in particular at and/or onto the underside of the footwear upper 12f.

This embodiment differs from the embodiment described in figure 8 in that the sole element material 18f is applied and foamed directly onto the footwear last 22f, forming therefore the at least one sole element 15f. In this embodiment the footwear last 22f is used as shaping carrier 20f.

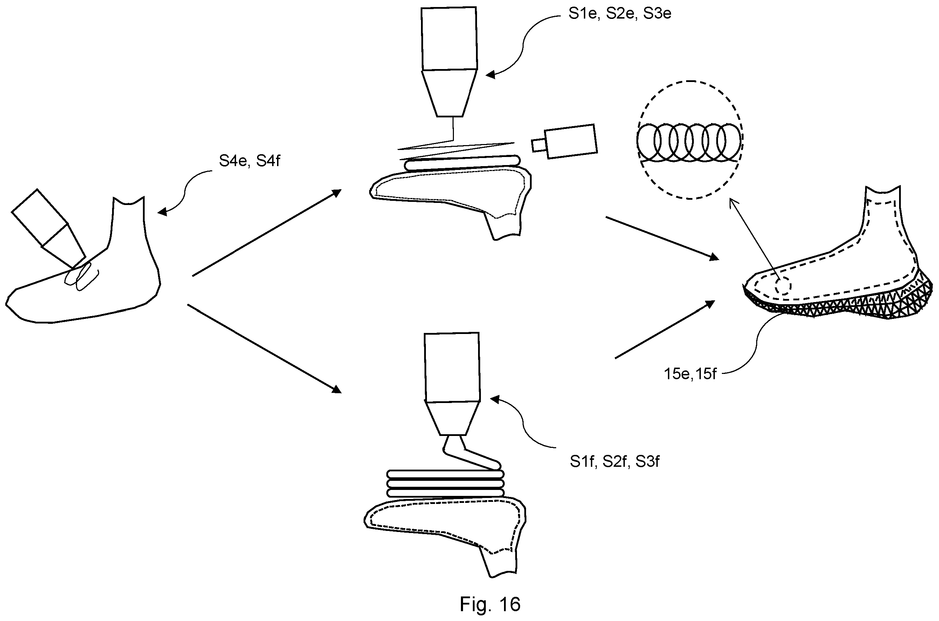

Figure 16 shows a schematic view of methods for manufacturing the article of footwear using the manufacturing station 38 and its fifth or sixth embodiments of the additive manufacturing unit 40e, 40f, the foaming unit 50e, 50f, and its fifth and sixth embodiment of the footwear upper forming unit 58e, 58f.

As it is shown in figure 16, the first performed step is step S4e of forming the footwear upper 12e, which is identical to the step S4d described above. The step S4e of forming the footwear upper 12e is performed by the footwear forming unit 58e, as shown in figure 10 and described above. After the footwear upper 12e is formed onto the footwear last 22e, the robotic handler 34 of the manufacturing station 38 transfers the footwear last 22e together with the footwear upper 12e formed thereto to the additive manufacturing unit 40e and the foaming unit 50e (cf. figure 14).

In the additive manufacturing unit 40e and the foaming unit 50e, a step S1e of forming the sole element precursor 16e and a step S2 of foaming the sole element precursor 16e are performed in parallel. In addition, a step S3e of connecting the at least one sole element 15e to the footwear upper 12e is performed simultaneously.

In the step S1e the sole element material 18e comprising a foaming agent is deposited onto the footwear last 22e. The sole element material 18e is applied onto footwear last 22e according to a first application scheme (not shown), forming a first sole element layer. The first sole element layer is foamed by a foaming unit 50e of the additive manufacturing unit 40e (cf. figure 14) performing therefore the step S2e of foaming the sole element precursor 16e. The same steps of layering as described above in figure 6 are referred also herein.

The outsole 17 is connected with the at least one sole element 15e as described before with respect to figure 6.

After the step S3e of connecting the at least one sole element 15e to the footwear upper 12e is performed, an article of footwear precursor is obtained. The robotic handler 34 may transfer the article of footwear precursor to the further manufacturing unit 72(cf. figure 2) of the manufacturing station 38, such that other manufacturing steps are performed.

In the other embodiment, shown in figure 16, the first performed step is a step S4f of forming a footwear upper 12f, which is identical to the step S4e described above. After the footwear upper 12f is formed onto the footwear last 22f, the robotic handler 34 transfer the footwear last 22f together with the footwear upper 12f formed thereto to the additive manufacturing unit 40f and the foaming unit 50f, described in figure 15 above.

In the additive manufacturing unit 40f, a step S1f and S2f of forming and foaming the sole element precursor 16f are performed in one single step.

The additive e manufacturing nozzle 47f dispenses the sole element material 18f comprising a foaming agent onto the footwear last 22f, in particular at and/or onto an underside of the footwear upper 12f. As a result, the step S1f of forming the sole element precursor 16f, a step S2f of foaming the sole element precursor 16f and a step S3f of connecting the at least one sole element 15f to the footwear upper 12f are performed simultaneously.

After the step S3f of connecting the at least one sole element 15f to the footwear upper 12f is performed, an article of footwear precursor is obtained. The robotic handler 34 may transfer the article of footwear precursor to the further manufacturing unit 72(cf. figure 2) of the manufacturing station 38, such that other manufacturing steps are performed.

In all these embodiments, in addition to forming the at least one sole element 15a-f, the outsole 17 may also be formed. The outsole 17 and/or an outsole precursor (not shown) may be formed by any of the additive manufacturing units 40a-f and/or foaming units 50a-f described herein. In one embodiment, the outsole 17 may be formed directly onto a bottom surface of the at least one sole element 15a-f. In another embodiment, the outsole 17 and/or the outsole precursor may be formed onto any of the shaping carriers 20a-f, and then may be connected to the at least one sole element 15a-f by welding, gluing and/or any other applicable method.

In yet another embodiment, the outsole 17 and/or the outsole precursor may be prefabricated by molding or by additive manufacturing, and may then be connected to the at least one sole element 15a-f by any of the above-mentioned method. The outsole 17 and the at least one sole element 15a-f may also be integrated with one another. In this case, the outsole 17 and the at least one sole element 15a-f may be formed simultaneously by the additive manufacturing units 40a-f and/or foaming units 50a-f.

In addition to the sole element precursor 16a, all the remaining sole element precursors 16b-f may also comprise recurring cell units 36 as described with respect to figure 6.

In all the aforementioned embodiments, the precursor article of footwear may be post-processed by performing a number of manufacturing steps, such as, for example, a step of printing a print mark, a step of curing, a step of plasma treatment, or any other conceivable step, which may be performed by the further manufacturing unit 72 of the manufacturing station 38. As a result, the article of footwear 10 is formed.

Various modifications to the embodiments described are possible and will occur to those skilled in the art without departing from the invention, which is defined by the following claims.

## Claims

1. A method for manufacturing of an article of footwear (10) having a footwear upper (12; 12a-f) and a sole unit (14), the sole unit having at least one sole element (15; 15a-f) and being connected to the footwear upper (12; 12a-f), comprising:
- a step (S1a-f) of forming a sole element precursor (16a-f) by additive manufacturing;
- a step (S2a-f) of foaming the sole element precursor (16a-f), thereby forming the at least one sole element (15; 15a-f); and
- a step (S3a-f) of connecting the at least one sole element (15; 15a-f) to the footwear upper (12a-f).

2. The method according to claim 1, wherein the step (S1a-f) of forming the sole element precursor (16a-f) comprises depositing a sole element material (18af) onto a shaping carrier (20a-f), in particular a footwear last (22d-f).

3. The method according to any one of the preceding claims, further comprising:
- a step (S4a-f) of forming the footwear upper (12; 12a-f) by applying at least one thermoplastic filament (24a-f) onto a footwear last (22a-f) to form a plurality of path segments (26), in particular loops (28), on the footwear last (22a-f) along an application path (30).

4. The method according to claim 3, wherein the step (S3a-f) of connecting the at least one sole element (15; 15a-c) to the footwear upper (12; 12a-c) is performed during the step (S4a-c) of forming the footwear upper (12; 12a-c) by partly applying the at least one thermoplastic filament (24a-c) onto the at least one sole element (15; 15a-c).

5. The method according to claim 3, wherein the step (S1d-f) of forming the sole element precursor (16d-f) is performed after the step (S4d-f) of forming the footwear upper (12; 12d-f).

6. The method according to claim 5, wherein the step (S3d-f) of connecting the at least one sole element (15; 15d-f) to the footwear upper (12; 12d-f) is performed during the step (S1d-f) of forming the sole element precursor (16d-f).

7. The method according to claim 5 or 6, wherein the step (S1d-f) of forming the sole element precursor (16d-f) comprises applying the sole element precursor (16d-f) at and/or onto an underside of the footwear upper (12; 12d-f).

8. The method according to any one of the preceding claims, wherein the step (S2b-c; S2e-f) of foaming the sole element precursor (16b-c; 16e-f) is performed during the step of forming the sole element precursor (16b-c; 16e-f).

9. The method according to any one of the preceding claims, wherein the step (S1a-f) of forming the sole element precursor (16a-f) comprises fine tuning at least one mechanical property in at least one specific area of the at least one sole element (15; 15a-f).

10. The method according to any one of the preceding claims, wherein the step (S1a-f) of forming the sole element precursor (16a-f) comprises forming the sole element precursor (16a-f) with a plurality of recurring cell units (36a).

11. The method according to claim 10, wherein the step (S1a-f) of forming the sole element precursor (16a-f) comprises varying a size of the plurality of recurring cell units (36a).

12. The method according to any one of the preceding claims, wherein the step (S1a-f) of forming the sole element precursor (16a-f) comprises employing different materials and/or additives in different portions of the sole element precursor (16a-f).

13. The method according to any one of the preceding claims, wherein the step (S2a-f) of foaming the sole element precursor (16a-f) comprises diversifying a foaming degree across different portions of the at least one sole element (15; 15a-f).

14. An article of footwear (10) manufactured by a method according to any one of the preceding claims.

15. A manufacturing station (38) for manufacturing of an article of footwear (10), in particular according to claim 14, the manufacturing station being configured to execute a method according to any one of the claims 1 to 13.
